(19) Europäisches Patentamt
European Patent Office
Office européen des brevets

(11) **EP 4 231 232 B1**

(12) **EUROPEAN PATENT SPECIFICATION**

(45) Date of publication and mention
of the grant of the patent:
**03.04.2024 Bulletin 2024/14**

(21) Application number: **23153842.2**

(22) Date of filing: **30.01.2023**

(51) International Patent Classification (IPC):
**G06T 7/00** *(2017.01)* **B21B 38/00** *(2006.01)*
**B21B 38/02** *(2006.01)*

(52) Cooperative Patent Classification (CPC):
**G06T 7/0004;** B21B 38/02; G06T 2207/20021;
G06T 2207/30136

(54) **STRIP SHAPE DETERMINING APPARATUS FOR METAL STRIP, ROLLING MILL, AND DETERMINATION METHOD**

BANDFORMBESTIMMUNGSVORRICHTUNG FÜR METALLBAND, WALZWERK UND BESTIMMUNGSVERFAHREN

APPAREIL DE DÉTERMINATION DE FORME DE BANDE POUR BANDE MÉTALLIQUE, LAMINOIR ET PROCÉDÉ DE DÉTERMINATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.02.2022 JP 2022025858**

(43) Date of publication of application:
**23.08.2023 Bulletin 2023/34**

(73) Proprietor: **Primetals Technologies Japan, Ltd.
Hiroshima-shi, Hiroshima 733-8553 (JP)**

(72) Inventors:
• **MOCHIZUKI, Chitoshi
Hiroshima, 733-8553 (JP)**
• **KANEMORI, Shinya
Tokyo, 100-8332 (JP)**

(74) Representative: **Strehl Schübel-Hopf & Partner
Maximilianstrasse 54
80538 München (DE)**

(56) References cited:
**JP-A- 2006 110 552     JP-A- 2008 307 586
JP-B1- 6 808 888**

**Description**

BACKGROUND OF THE INVENTION

1. Field of the Invention

The present invention relates to a strip shape determining apparatus for a metal strip, a rolling mill, and a determination method.

2. Description of the Related Art

Japanese Patent No. 6808888 describes an inappropriate quality judgment apparatus and an inappropriate quality judgment method capable of easily judging an inappropriate quality of the strip surface shape of a metal strip without using a special light source such as a rod-like light source, the inappropriate quality judgment apparatus includes: a roll whose rotary shaft is extended and installed in the width direction of a rolled steel strip and that lifts the rolled steel strip upward; cameras that captures images including a lifted area of the rolled steel strip lifted upward by the roll; and a controller that judges an inappropriate quality of the strip shape of the rolled steel strip on the basis of the images captured by the cameras.

Japanese Patent No. 2008307586 discloses a method for detecting characteristics of the shape profile of rolled material. The material is irradiate with slit light, an image of the reflected light is captured and a profile line is extracted from the image. The shape of the profile line is characterized using Chebyshev basis functions.

SUMMARY OF THE INVENTION

A large number of technologies have been conventionally known which determine the quality of a strip shape of a metal strip rolled by a rolling mill, for example the presence or absence of strip elongation, on the basis of linear-shaped or rod-shaped reflection light long in a strip width direction of the metal strip.

The determination is based on a fact that when a change in the strip shape occurs due to the occurrence of a partial elongation, the shape of the reflection light that has been in a linear or rod shape becomes an irregular shape, and a part thereof is moved or displaced.

However, the linear or rod shaped reflection light has a narrow reflection light area in a rolling direction at each position in the strip width direction. Thus, the linear or rod shaped reflection light, for example, tends to be significantly affected by a slight disturbance caused by a small obstacle or the like, so that an erroneous determination tends to occur.

The present inventor et al. have found that the effect of such a disturbance can be reduced when determination is made by using band shaped reflection light as disclosed in Japanese Patent No. 6808888, and as a result of investigation, have further conceived the present invention utilizing characteristics of the band shaped reflection light more.

The present invention provides a strip shape determining apparatus for a metal strip, a rolling mill, and a determination method that are less likely to be affected by a slight disturbance or a small obstacle occurring suddenly than conventional.

The present invention includes a plurality of means for solving the above-described problems. To cite an example of the means, there is provided a strip shape determining apparatus for a rolled metal strip, the strip shape determining apparatus including: a camera that is installed so as to capture an image including an area where band shaped reflection light that crosses a surface of the rolled metal strip in a strip width direction is visible; and an image processing unit that determines a strip shape of the metal strip on a basis of the image captured by the camera, the image processing unit dividing the area within the image into a plurality of segments in the strip width direction of the metal strip, converting a position in the strip width direction within a strip width range of the area within the image into a range of $-1 \leq x \leq 1$ supposing that a value indicating a strip width direction position of each of the segments formed by the division is a variable (x), and obtaining coefficients ($C_0'$, $C_1'$, $C_2'$, and $C_4'$) of a Chebyshev polynomial of a following Equation (1) by applying index information indicating a size of the area in each segment formed by the division to the Chebyshev polynomial including only a zeroth order term, a first order term, a second order term, and a fourth order term of x, the Chebyshev polynomial having the index information as a distribution E(x) of each of the segments, and transferring, as a determination result signal of a strip elongation distribution in the strip width direction, one or more of the coefficients including a zeroth order coefficient ($C_0'$), a first order coefficient ($C_1'$), a second order coefficient ($C_2'$), and a fourth order coefficient ($C_4'$) as information corresponding to the distribution in the strip width direction of strip elongation in a rolling direction.

$$E(x) = C_0' + C_1' \times x + C_2' \times (2x^2 - 1) + C_4' \times (8x^4 - 8x^2 + 1) \text{ where } -1 \leq x \leq 1 \qquad (1)$$

According to the present invention, it is possible to provide a strip shape determining apparatus for a metal strip, a rolling mill, and a determination method that are less likely to be affected by a little disturbance and a small obstacle occurring suddenly than conventional. Problems, configurations, and effects other than those described above will be made apparent by the description of the following embodiment.

BRIEF DESCRIPTION OF THE DRAWINGS

FIG. 1 is a diagram showing an outline of rolling equipment including a strip shape determining apparatus for a metal strip according to an embodiment of the present invention;
FIG. 2 is a diagram showing an example of a state of the metal strip between stands at a time of operation in the rolling equipment;
FIG. 3 is a diagram showing another example of the state of the metal strip between the stands at a time of operation in the rolling equipment;
FIG. 4 is a diagram showing an example of a method of calculating an average length within each divided segment in the strip shape determining apparatus for a metal strip according to the embodiment and a state of component distribution of a Chebyshev polynomial;
FIG. 5 is a diagram showing an example of a method of calculating an area within each divided segment in the strip shape determining apparatus for a metal strip according to the embodiment and a state of component distribution of the Chebyshev polynomial;
FIG. 6 is a diagram showing an example of a method of calculating a median value of lengths within each divided segment in the strip shape determining apparatus for a metal strip according to the embodiment and a state of component distribution of the Chebyshev polynomial;
FIG. 7 is a diagram showing an example of a distribution of a distance between boundary lines on an upstream side and a downstream side of each divided segment of a reflection light area in a case where the metal strip is divided into seven segments in a width direction in the strip shape determining apparatus for a metal strip according to the embodiment;
FIG. 8 is a diagram showing an example of a display screen of a monitor in the strip shape determining apparatus for a metal strip according to the embodiment;
FIG. 9 is a diagram showing a strip shape control block for a first order component in the strip shape determining apparatus for a metal strip according to the embodiment;
FIG. 10 is a diagram showing a strip shape control block for a second order component in the strip shape determining apparatus for a metal strip according to the embodiment;
FIG. 11 is a diagram showing a strip shape control block for a fourth order component in the strip shape determining apparatus for a metal strip according to the embodiment;
FIG. 12 is a diagram showing an example of arrangement relation between the metal strip and a camera in a three-dimensional space;
FIG. 13 is a diagram showing a state in which the metal strip and the camera in FIG. 12 are projected onto an X-Y two-dimensional plane;
FIG. 14 is a diagram showing a state in which the metal strip and the camera in FIG. 12 are projected onto an X-Z two-dimensional plane;
FIG. 15 is a diagram showing a state of correction of boundary line positions of a reflection light area in the strip shape determining apparatus for a metal strip according to the embodiment;
FIG. 16 is a diagram showing an example of relation between a distance (D) from a metal strip (with a strip width of 2 m) to the camera and a perspective correction ratio $\alpha(0)$ in the strip shape determining apparatus for a metal strip according to the embodiment;
FIG. 17 is a diagram showing an example of relation between a distance (D) from a metal strip (with a strip width of 1 m) to the camera and the perspective correction ratio $\alpha(0)$ in the strip shape determining apparatus for a metal strip according to the embodiment; and
FIG. 18 shows a flow of sensing and control of a strip shape in the strip shape determining apparatus for a metal strip according to the embodiment.

DESCRIPTION OF THE PREFERRED EMBODIMENTS

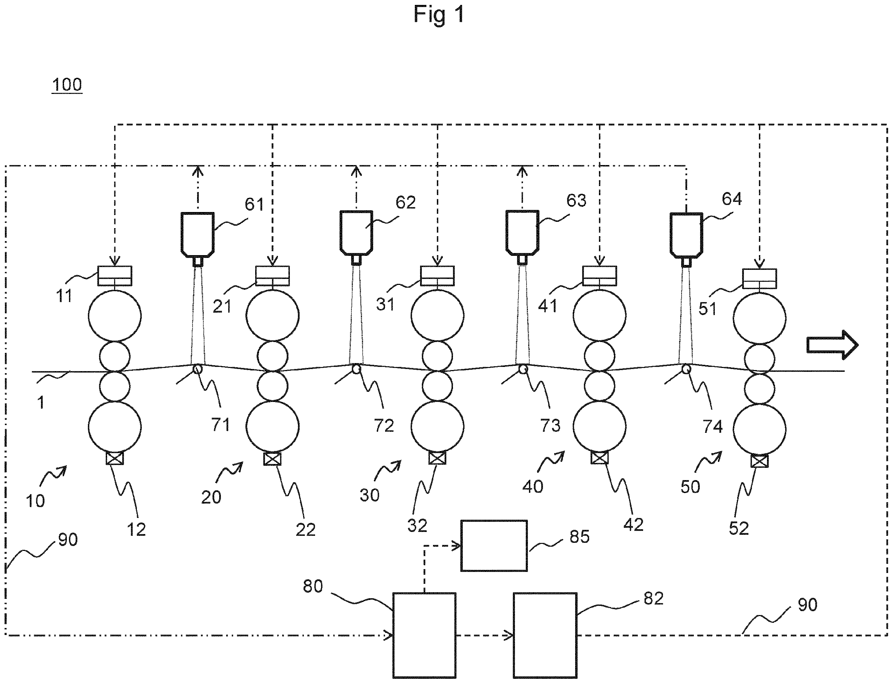

An embodiment of a strip shape determining apparatus for a metal strip, a rolling mill, and a determination method according to the present invention will be described with reference to FIGS. 1 to 18. Incidentally, in the drawings used in the present specification, identical or corresponding constituent elements are identified by the same or similar reference numerals, and repeated description of these constituent elements may be omitted.

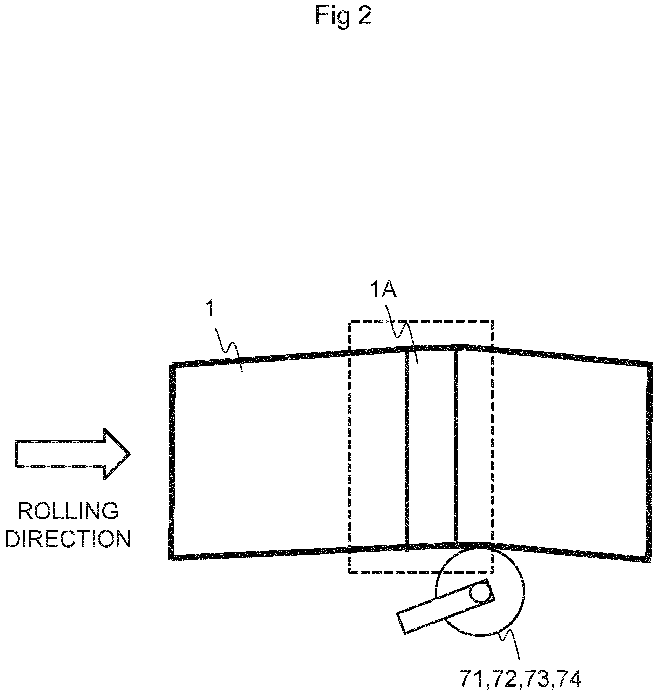

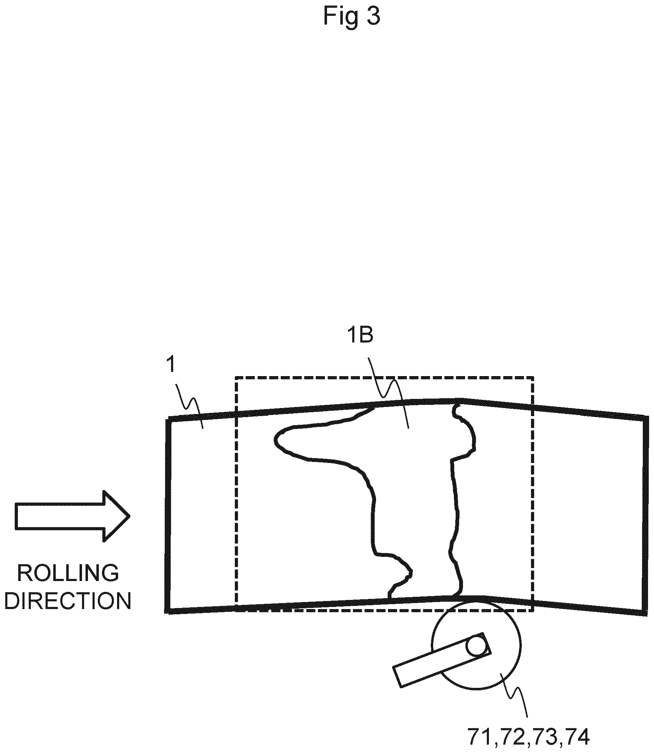

Referring to FIGS. 1 to 3, description will first be made of a general configuration of rolling equipment including the strip shape determining apparatus for a metal strip. FIG. 1 is a schematic diagram showing a configuration of the strip shape determining apparatus for a metal strip according to the present embodiment and rolling equipment including the same. FIG. 2 and FIG. 3 are diagrams showing an example of a state of a metal strip surface between stands at a time of operation in the rolling equipment.

Rolling equipment 100 that rolls a metal strip 1 shown in FIG. 1 includes an F1 stand 10, an F2 stand 20, an F3 stand 30, an F4 stand 40, an F5 stand 50, cameras 61, 62, 63, and 64, loopers 71, 72, 73, and 74 for tension control, an image processing computer 80, a controller 82, a monitor 85, and the like. In addition, the F1 stand 10, the F2 stand 20, the F3 stand 30, the F4 stand 40, the F5 stand 50, the cameras 61, 62, 63, and 64, the image processing computer 80, and the controller 82 are connected to one another by a communication line 90.

Among these, the cameras 61, 62, 63, and 64, the loopers 71, 72, 73, and 74 for tension control, and the image processing computer 80 constitute the strip shape determining apparatus for a metal strip according to the present invention.

It is to be noted that the rolling equipment 100 is not limited to a form in which five rolling stands are installed as shown in FIG. 1, but at least two stands or more suffice.

Each of the F1 stand 10, the F2 stand 20, the F3 stand 30, the F4 stand 40, and the F5 stand 50 includes an upper work roll and a lower work roll, an upper backup roll and a lower backup roll supporting the upper work roll and the lower work roll by being in contact with the upper work roll and the lower work roll, respectively, a depression cylinder 11, 21, 31, 41, or 51 provided on an upper portion of the upper backup roll, and a load sensor 12, 22, 32, 42, or 52. Incidentally, a six-high configuration further provided with an intermediate roll between each work roll and each backup roll can be adopted.

The looper 71 is a roll for tension control, which is installed between the F1 stand 10 and the F2 stand 20. The looper 71 is disposed with a rotational axis thereof extending in the width direction of the metal strip 1 such that the travelling metal strip 1 is mounted on the looper 71, and the looper 71 is installed so as to hold the metal strip 1 by raising the metal strip 1 upward.

Incidentally, conceivable as the looper 71 is, for example, a looper that biases the metal strip 1 upward by a spring or the like or a looper that raises the metal strip 1 by a hydraulic cylinder, a motor drive, or the like.

The camera 61 is installed so as to capture an image including an area where band shaped reflection light that crosses the rolled metal strip 1 in a strip width direction is visible. Preferably, the camera 61 is installed so as to photograph an image including a raised area of the metal strip 1 raised to an upward side by the looper 71. In particular, the camera 61 can be installed on the outside in the strip width direction of the metal strip 1 when the metal strip 1 is as viewed from above, and the camera 61 can be disposed at a height equal to or more than 1 m and equal to or less than 5 m from the metal strip 1 and at a distance equal to or more than 5 m and equal to or less than 40 m from a strip edge of the metal strip 1. The position in a rolling direction of the camera 61 is preferably substantially the same as that of the looper 71. The data of the image captured by the camera 61 is transmitted to the image processing computer 80 via the communication line 90.

Similarly, the looper 72 for tension control is installed between the F2 stand 20 and the F3 stand 30, the looper 73 for tension control is installed between the F3 stand 30 and the F4 stand 40, and the looper 74 for tension control is installed between the F4 stand 40 and the F5 stand 50.

In addition, the camera 62 is installed in a position of photographing an image including a raised area of the metal strip 1 raised to the upward side in a vertical direction by the looper 72, the camera 63 is installed in a position of photographing an image including a raised area of the metal strip 1 raised to the upward side by the looper 73, and the camera 64 is installed in a position of photographing an image including a raised area of the metal strip 1 raised to the upward side by the looper 74. The positions in the rolling direction of the cameras 62, 63, and 64 are preferably substantially the same as those of the loopers 72, 73, and 74, respectively. The data of images captured by the cameras 62, 63, and 64 is transmitted to the image processing computer 80 via the communication line 90.

As with the camera 61, the cameras 62, 63, and 64 are also preferably installed on the outside in the strip width direction of the metal strip 1 when the metal strip 1 is viewed from above. Further, the cameras 62, 63, and 64 can be disposed at a height equal to or more than 1 m and equal to or less than 5 m from the metal strip 1 and at a distance equal to or more than 5 m and equal to or less than 40 m from the strip edge of the metal strip 1.

By these cameras 61, 62, 63, and 64, a capturing step is performed in which images including areas where band shaped reflection light that crosses the rolled metal strip 1 in the strip width direction is visible are captured by the cameras 61, 62, 63, and 64.

Illumination can be further provided which illuminates raised photographing areas of the metal strip 1 raised to the upward side by the rolls, the photographing areas being mainly captured by the cameras 61, 62, 63, and 64. Ordinary illumination disposed as appropriate on a ceiling or the like of a rolling plant in which the rolling equipment 100 is installed suffices as this illumination. In the present invention, no special new illumination equipment is necessary. However, dedicated illumination may be provided.

The image processing computer 80 performs various kinds of processing for determining the strip shape of the metal strip 1 on the basis of the images captured by the cameras 61, 62, 63, and 64.

For example, in image processing of an image including a raised area of the metal strip 1 raised to the upward side by the looper 71, 72, 73, or 74 as shown in FIG. 2 or FIG. 3, a range (1A or 1B) including boundaries on an upstream side and a downstream side of a part in which the luminance of the reflection light on the strip surface, which is visible in the image, is higher than the value of a specific luminance is identified as a reflection light area 1A or a reflection light area 1B.

The image processing computer 80 in the present embodiment divides the reflection light area within each image into a plurality of segments in the strip width direction of the metal strip 1, and transfers, as a signal, information about a distribution in the strip width direction of strip elongation in the rolling direction on the basis of index information related to the size of the reflection light area, such as an area value, an average length in the rolling direction, a median value of lengths in the rolling direction, or the like in each segment formed by the division.

Here, preferably, the above-described index information can be set as an average length in the rolling direction or a median value of lengths in the rolling direction, the average length or the median value being calculated for each pixel unit in the strip width direction, or an area in each segment formed by the division.

In the area where the band shaped reflection light that crosses the metal strip 1 in the strip width direction is visible, when elongation in the rolling direction (band strip longitudinal direction) in each position in the strip width direction of the metal strip 1 is uniform, a distribution difference according to a manner of application of the illumination is small, as shown in FIG. 2, because the surface of the metal strip 1 is flat and has a small strip wave. Therefore, the boundary lines on an upstream side and a downstream side of the reflection light area 1A resulting from the illumination are substantially parallel with each other, and a parameter such as the area value, the average length in the rolling direction, or the like in each segment in a case where the reflection light area 1A is divided into a plurality of segments in the strip width direction is substantially uniform in all of the segments.

On the other hand, in a case where there is a difference in elongation in the rolling direction (for example edge elongation or center elongation) according to the position in the strip width direction, the manner of application of the illumination differs because of difference in height due to a strip wave or the like, and as shown in FIG. 3, one or both of the boundary lines on the upstream side and the downstream side of the reflection light area 1B resulting from the illumination are undulated, and are not in a parallel state. Therefore, the parameter such as the length in the rolling direction or the like in each segment in the case where the metal band shaped reflection light area 1B is divided into a plurality of segments in the strip width direction is nonuniform according to the position in the strip width direction.

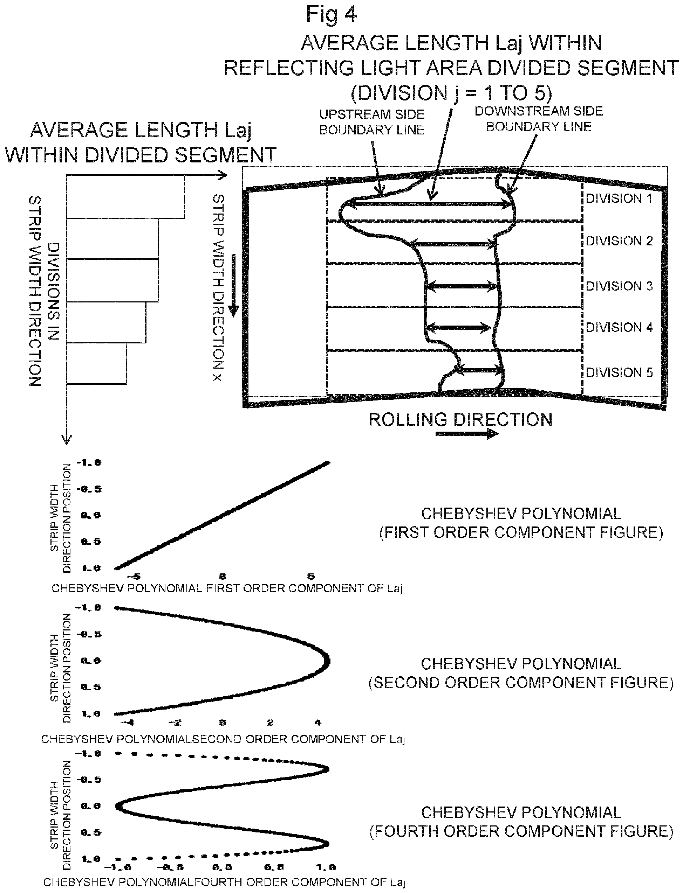

Accordingly, the image processing computer 80 divides various parameters (index information) including the area value and the like related to a distance between the two boundary lines on the upstream side and the downstream side of the reflection light area into a plurality of parameters in the strip width direction, determines the parameters, and preferably resolves these values into components (distributions of a zeroth order component, a first order component, a second order component, and a fourth order component) by using a Chebyshev polynomial. A determination result according to each component value is output to the monitor 85 and the controller 82. Details thereof will be described later in detail with reference to FIG. 4 and subsequent figures. Preferably, this image processing computer 80 is a main constituent that performs an image processing step.

Returning to FIG. 1, the controller 82 is an apparatus that controls operation of each device within the rolling equipment 100. In the present embodiment, the controller 82 is an apparatus that performs various kinds of control according to determination of the strip shape of the metal strip 1 in the image processing computer 80.

The image processing computer 80 and the controller 82 can be formed by a computer having the monitor 85 such as a liquid crystal display or the like to be described later, an input device, a storage device, a CPU, a memory, and the like. The image processing computer 80 and the controller 82 may be formed as one computer or may be formed as separate computers, and are not particularly limited.

Control of operation of each device by the image processing computer 80 and the controller 82 is performed on the basis of various kinds of programs recorded in the storage device. Incidentally, operation control processing performed by the image processing computer 80 and the controller 82 may be integrated in one program or may be separated into respective pieces of processing in a plurality of programs, or a combination thereof may be adopted. In addition, a part or the whole of the programs may be implemented by dedicated hardware, or may be modularized.

The monitor 85 is a display device such as a display or the like and an audio device such as an alarm or the like. The monitor 85 is an apparatus for, when the image processing computer 80 determines that a problem has occurred in the strip shape, for example, notifying an operator of work for dealing with the problem. Therefore, a display is often used as such a monitor 85.

Here, the above-described image processing computer 80 includes a display signal section, which transmits a signal related to content to be displayed on the monitor 85 to the monitor 85.

During operation, the operator can confirm the state of the strip shape by visually checking the display screen of the monitor 85 and each stand itself and between the stands.

It is to be noted that there is no limitation to a mode of notifying the operator of the occurrence of the problem in the strip shape and automatically performing an operation of remedying the problem in the strip shape by the controller 82. It is possible to adopt a mode of only making display on the monitor 85 or a mode of omitting display on the monitor 85 and only automatically performing the operation of remedying the problem in the strip shape by the controller 82.

Concrete examples of the strip shape determining apparatus for the rolled metal strip 1 and the determination method in the present invention will next be described with reference to FIG. 4 and subsequent figures. First, details of a method of calculating a state quantity in the width direction from calculated values of the boundary lines of the reflection light area will be described with reference to FIGS. 4 to 7.

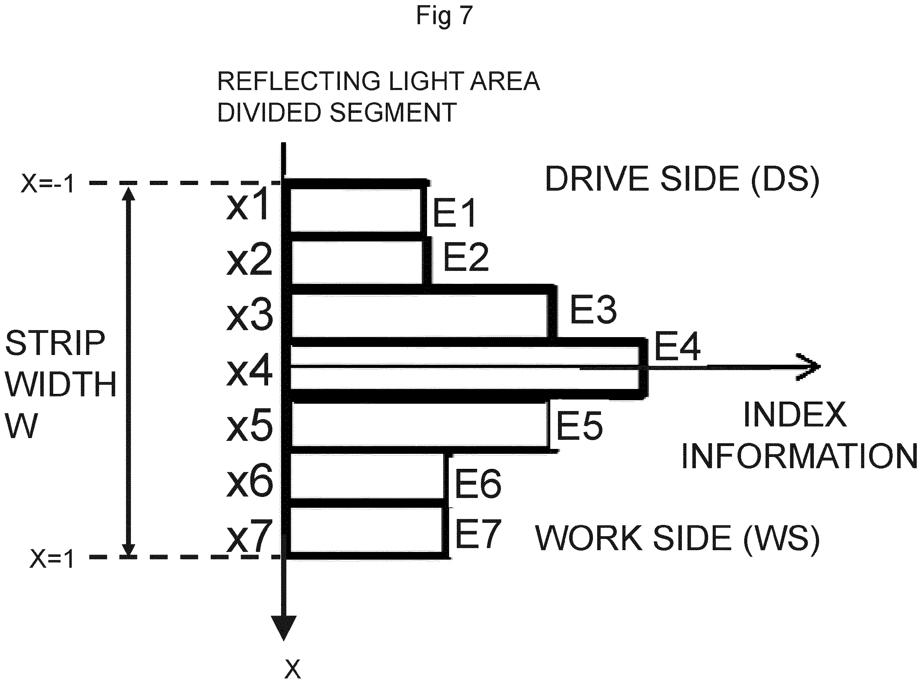

FIGS. 4 to 6 are diagrams showing an example of a method of calculating index information in each divided segment of a reflection light area in the strip shape determining apparatus for a metal strip according to the embodiment and a state of component distribution of each order of a Chebyshev polynomial. FIG. 7 is a diagram showing an example of distribution of a distance between the boundary lines on the upstream side and the downstream side of each reflection light area divided segment when a range including the reflection light area of the metal strip is divided into seven segments in the strip width direction.

First, the image processing computer 80 subjects a rolled surface image range selected from the images captured by the cameras 61, 62, 63, and 64 to binarization processing for each pixel, and obtains an appropriate threshold value for a degree of brightness. The image processing computer 80 thereby obtains, in a rolling longitudinal direction, two width direction boundary lines on the upstream side and the downstream side of the reflection light area. This processing is performed for all in a width direction, thereby identifying the reflection light areas 1A and 1B. As for details thereof, a publicly known method can be adopted.

Next, the reflection light areas 1A and 1B are divided into N segments in the strip width direction (divided into five segments in FIGS. 4 to 6 and divided into seven segments in FIG. 7). Letting j be the number (No.) of each divided segment (j = 1 to N), for pixels present within the image of the divided segment No. j, a distance between boundary lines in the rolling direction (Y-axis direction) on the upstream side and the downstream side of the reflection light area is obtained at each pixel position in the strip width direction (X-axis direction), and index information is calculated. In FIG. 4, for example, a result of calculating an average length Laj in the rolling direction as the index information is produced in a bar figure.

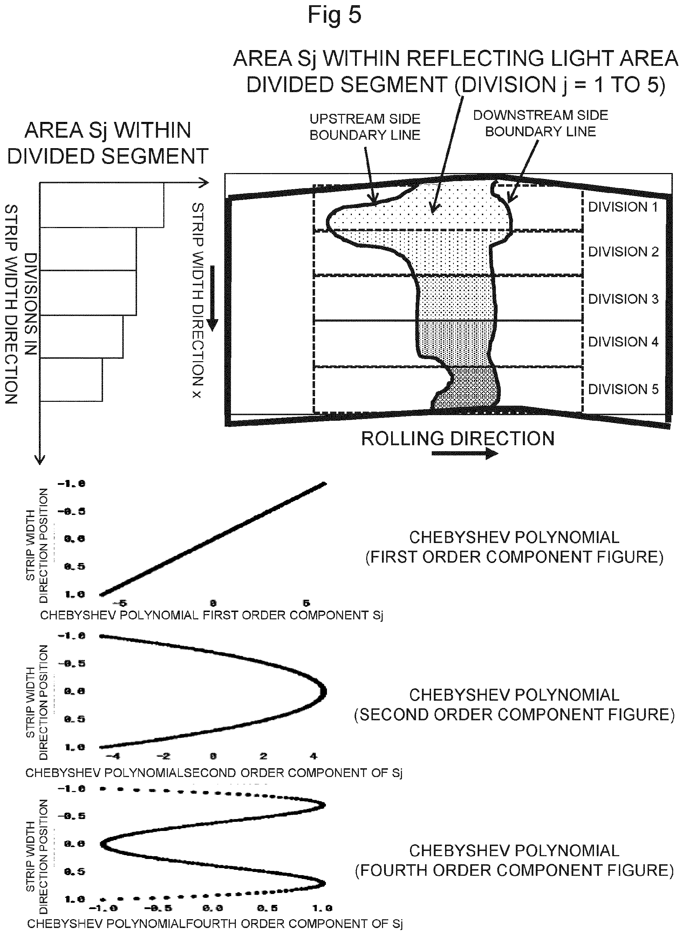

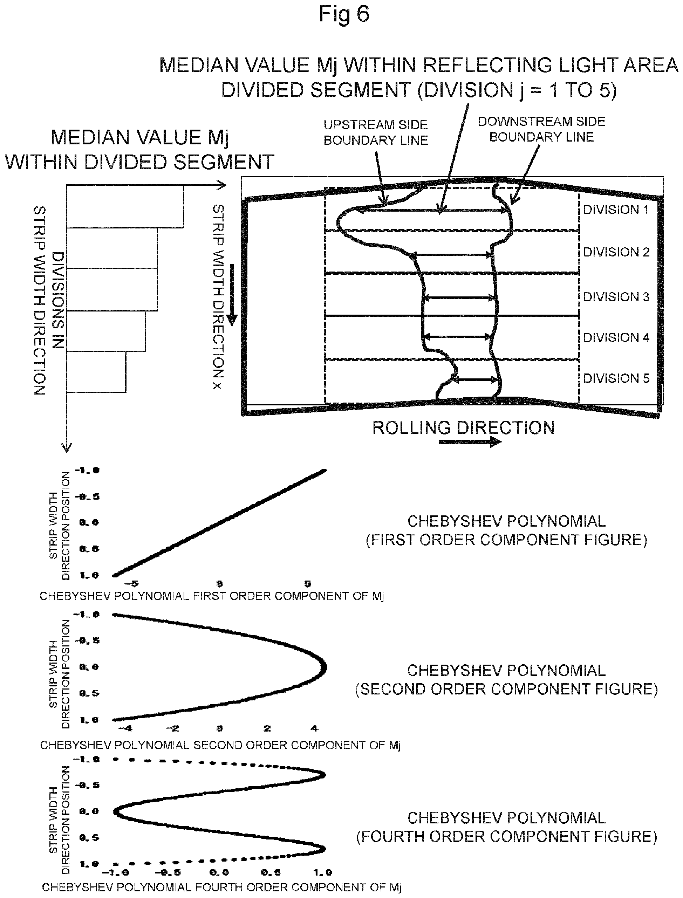

It is to be noted that the data of the bar figure is not limited to the average length Laj in the rolling direction as in FIG. 4 described above. Besides, as shown in FIG. 5, as the index information included within the divisions, a total area value Sj of each divided segment can be produced in a bar figure. In addition, as the index information included within the divisions, as shown in FIG. 6, a median value Mj of the length of the distance between the boundary lines on the upstream side and the downstream side of the reflection light area within each divided segment when the rate of occurrence of the length is converted into a histogram can be produced in a bar figure.

At this time, when index information E(x) is approximated by a Chebyshev polynomial

$$E(x) = C_0{}' + C_1{}' \times x + C_2{}' \times (2x^2 - 1) + C_4{}' \times (8x^4 - 8x^2 + 1) \qquad ...(1)$$

to be described later in detail, there are four unknown coefficients $C_0{}'$, $C_1{}'$, $C_2{}'$, and $C_4{}'$, and four or more relational equations are necessary to determine the unknown quantities. Therefore, the number of divisions in the strip width direction is set to be four or more. In addition, a central portion in the strip width direction preferably belongs to a certain divided segment. It is therefore preferable that the number of divisions be an odd number, and that the strip width central portion not be positioned at a boundary between divided segments.

Incidentally, it is preferable that a plurality of pixels be included in one divided segment in the strip width direction. This is to reduce susceptibility to an effect in a case where there is an abnormality in a pixel in the strip width direction. The number of divisions is preferably 4 to 11. An odd number is particularly preferable. Four as a lower limit of the number of divisions is to make it possible to obtain the coefficients of the Chebyshev polynomial. Eleven as an upper limit of the number of divisions is set because coefficients of sufficient accuracy are obtained when there are 11 divisions, and even when the number of divisions is further increased, accuracy is not raised by a degree by which a calculation load is increased.

Next, supposing that a value indicating a position in the strip width direction in the bar figure is a variable (x), the image processing computer 80 performs coordinate transformation of the position in the strip width direction of the area within the image into a range of $-1 \leq x \leq 1$, where x = -1 represents a strip width drive side (DS) edge portion, x = 1 represents a strip width work side (WS) edge portion, and x = 0 represents a strip width central position. The image processing computer 80 first calculates a coefficient vector ($C_0$, $C_1$, $C_2$, $C_4$) of each component by using a function expressed by $E(x) = C_0 + C_1 \times x + C_2 \times x^2 + C_4 \times x^4$ including only terms of zeroth order, first order, second order, and fourth order, in which the index information in each segment is set as a distribution (E(x)) of each segment. Thereafter, the image processing computer 80 assumes that the Chebyshev polynomial and the above-described equation are equivalent equations, obtains a Chebyshev polynomial coefficient vector $(C_0', C_1', C_2', C_4')$ as each component, and transfers the Chebyshev polynomial coefficient vector as a signal representing the strip shape.

As features of approximating the index information corresponding to a rolling direction strip elongation distribution with respect to the strip width direction by the Chebyshev polynomial, (1) a strip width range (X-axis) is normalized in a range of -1 to +1, and (2) the first order component (unilateral elongation), the second order component (center elongation and fringe elongation), and the fourth order component (quarter elongation) are separated from each other, so that a control operation amount for each component can be determined easily.

A method of calculating the Chebyshev polynomial coefficient vector $(C_0', C_1', C_2', C_4')$ from the measured value of each divided segment will be illustrated in the following. Here, description will be made by taking as an example a case where, as shown in FIG. 7, unlike FIG. 4 or the like, the metal strip 1 is divided into seven segments in the width direction.

Letting x = xi, a relational equation between a vector $(E_1, E_2, E_3, E_4, E_5, E_6, E_7)$ of each distribution value of the index information when seven divisions are made in the width direction as shown in FIG. 7 and a fourth order equation coefficient vector $(C_0, C_1, C_2, C_4)$ can be expressed as in the following Equation (2):

$$E(x_i) = C_0 + C_1 \times x_i + C_2 \times x_i^2 + C_4 \times x_i^4 \qquad (i = 1 \text{ to } 7) \qquad ...(2)$$

Equation (2) is expressed by vectors and a matrix as in Equation (3) shown in the following.
[Expression 1]

$$\begin{pmatrix} E_1 \\ E_2 \\ E_3 \\ E_4 \\ E_5 \\ E_6 \\ E_7 \end{pmatrix} = \begin{pmatrix} 1 & x_1 & x_1^2 & x_1^4 \\ 1 & x_2 & x_2^2 & x_2^4 \\ 1 & x_3 & x_3^2 & x_3^4 \\ 1 & x_4 & x_4^2 & x_4^4 \\ 1 & x_5 & x_5^2 & x_5^4 \\ 1 & x_6 & x_6^2 & x_6^4 \\ 1 & x_7 & x_7^2 & x_7^4 \end{pmatrix} \begin{pmatrix} C_0 \\ C_1 \\ C_2 \\ C_4 \end{pmatrix} \qquad \cdots \ (3)$$

Here, in Equation (3), a strip width direction position (x) is ($-1 \leq x \leq 1$), where x = -1 represents an strip width edge position on the drive side (DS), and x = 1 represents a strip width edge position on the work side (WS). xi (i = 1 to 7) is a strip width direction position ($-1 \leq xi \leq 1$) at which a sensed value is set in each divided segment position, and can be said to be a width direction position coordinate (xi) at a central position of each divided segment with a strip width central position set as x = 0.

From this Equation (3), the unknown quantity vector $(C_0, C_1, C_2, C_4)$ is calculated by a least-square method, and the Chebyshev polynomial coefficient vector $(C_0', C_1', C_2', C_4')$ is obtained. The least-square method at this time can be a method illustrated in the following.

First, when Equation (3) is represented as E = M $\times$ C by expressing Equation (3) by characters in a matrix form and a vector form, the left side and the right side multiplied by a transposed matrix $M^T$ from the left are expressed by the following Equation (4).

$$M^T \times E = (M^T \times M) \times C \qquad ...(4)$$

where E = $[E_1, E_2, E_3, E_4, E_5, E_6, E_7]$, M = $[[1, x_1, x_1^2, x_1^4], [1, x_2, x_2^2, x_2^4], [1, x_3, x_3^2, x_3^4], [1, x_4, x_4^2, x_4^4], [1, x_5, x_5^2, x_5^4], [1, x_6, x_6^2, x_6^4], [1, x_7, x_7^2, x_7^4]]$, and C = $[C_0, C_1, C_2, C_4]$.

Hence, a coefficient vector C is calculated in the following Equation (5) using an inverse matrix ($M^T \times M^{-1}$ of a matrix ($M^T \times M$.

$$C = (M^T \times M)^{-1} \times M^T \times E \qquad ...(5)$$

$(C_0, C_1, C_2, C_4)$ is obtained from this Equation (5), and the above-described Equation (1) is obtained when the index information E(x) indicating the state of the reflection light area is expressed by the Chebyshev polynomial coefficient vector ($C_0'$, $C_1'$, $C_2'$, $C_4'$).

Hence, from Equation (1) and Equation (2), ($C_0'$, $C_1'$, $C_2'$, $C_4'$) can each be calculated by the following Equation (6).

$$C_0' = C_0 + C_2' - C_4'$$

$$C_1' = C_1$$

$$C_2' = 1/2 \times (C_2 + C_4)$$

$$C_4' = 1/8 \times C_4 \qquad ...(6)$$

Here, the term $C_0'$ of the zeroth order component is necessary in the equation, and is therefore preferably obtained. The term $C_0'$ of the zeroth order component represents index information serving as a baseline (foundation) of the whole, and the components of the other orders represent the component distributions of the respective orders while superimposed on the baseline. In a case where strip elongation distributions corresponding to the components of the first and higher orders do not occur, the distance between the boundary lines on the upstream side and the downstream side of the reflection light area is a length substantially uniform in the rolling direction, as shown in FIG. 2.

In addition, in the present embodiment, suppose that a third order component is not used. This is because a large strip elongation of the third order component is unlikely to occur in actuality. A condition determination of the shape of the rolled strip can be made more easily by thus omitting computation processing and handling means for the third order component.

The image processing computer 80 can output, to the controller 82, a control command signal for correcting leveling, a bending force, a pair cross angle, or the like on the basis of a strip width direction polynomial approximation result obtained in Equation (6). Further, alternatively or in addition, the operator can be notified of correction information for the leveling, the bending force, the pair cross angle, or the like by outputting a display command signal for making guidance display necessary to correct the leveling, the bending force, the pair cross angle, or the like on the monitor 85.

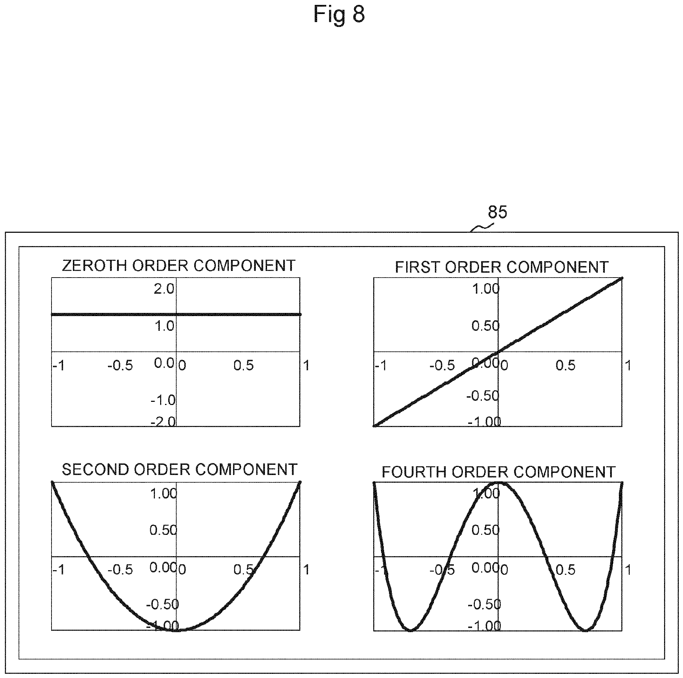

Preferably, the image processing computer 80 can transfer a signal to the monitor 85 so as to display figures of the respective component terms of the zeroth order component ($C_0'$), the first order component ($C_1' \times x$), the second order component ($C_2' \times (2x^2 - 1)$), and the fourth order component ($C_4' \times (8x^4 - 8x^2 + 1)$) in the function of the vector ($C_0'$, $C_1'$, $C_2'$, $C_4'$) of each order term in E(x) described above. A screen displayed on the monitor 85 is a screen as shown in FIG. 8, for example.

FIG. 8 is a diagram showing an example of the display screen of the monitor. FIG. 8 shows also the zeroth order component term ($C_0'$). However, automatic control or operation assistance for the operator on the basis of the zeroth order component term is not performed. Thus, it is not necessarily necessary to transfer the signal of the zeroth order component term to the monitor 85 or display the zeroth order component term on the monitor 85. Incidentally, information about a change in line tension can be recognized from the zeroth order component term.

The operator can check the screen shown in FIG. 8, and perform an operation of correcting, for example, the leveling, the bending force, the pair cross angle (in a case of a pair cross rolling mill), or the like. For example, the first order component $C_1'$ indicates unilateral elongation, and therefore the leveling of the depression cylinders 11, 21, 31, 41, and 51 is operated.

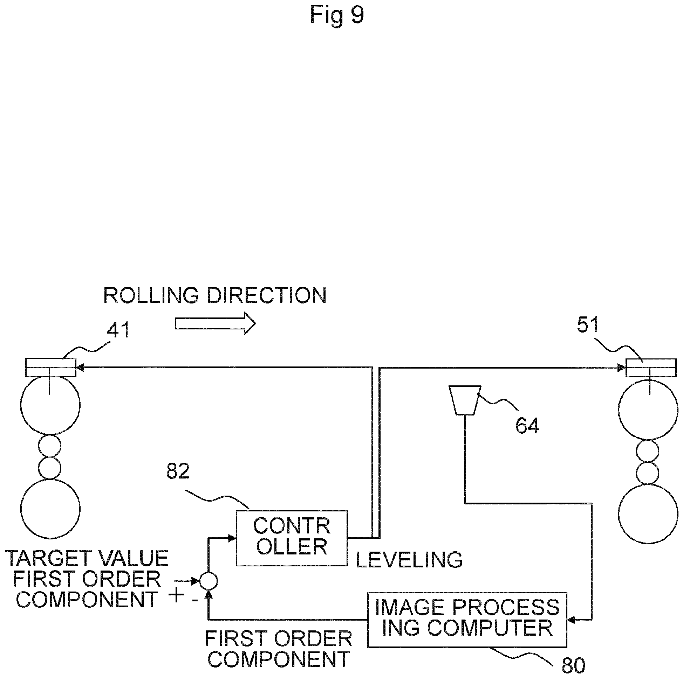

FIG. 9 is a diagram showing a strip shape control block for the first order component $C_1'$. Of the Chebyshev polynomial coefficients, the first order component $C_1'$ indicates unilateral elongation. Thus, an operation command signal is output to the controller 82 so as to normalize the first order component (into a target range) by operating the leveling of the depression cylinder 41 on the drive side (DS) and the work side (WS) on the upstream side of the camera 64 in question and/or the depression cylinder 51 on the drive side (DS) and the work side (WS) on the downstream side of the camera 64.

Incidentally, while FIGS. 9 to 11 illustrate a configuration between the F4 stand 40 and the F5 stand 50, a similar configuration can be adopted also between another F1 stand 10 and the F2 stand 20, between the F2 stand 20 and the F3 stand 30, or between the F3 stand 30 and the F4 stand 40.

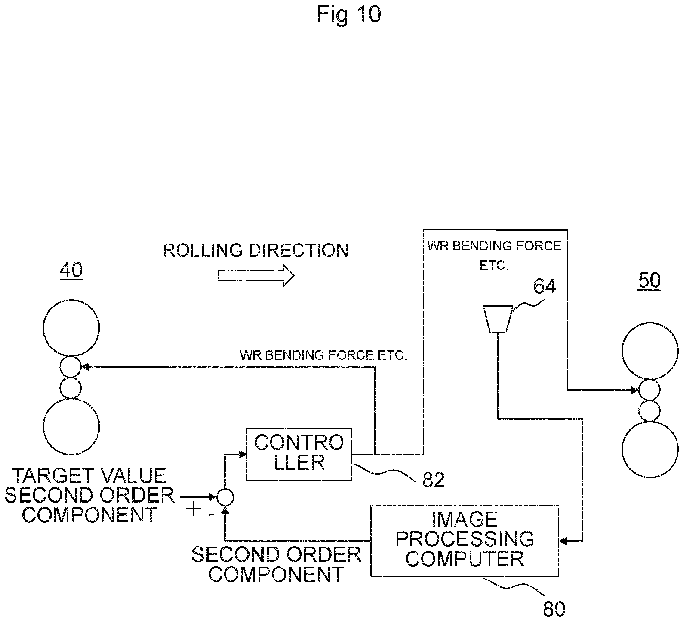

FIG. 10 is a diagram showing a strip shape control block for the second order component $C_2'$. Of the Chebyshev polynomial coefficients, the second order component $C_2'$ indicates fringe elongation or center elongation. Accordingly, one or more of the following operations are performed. The second order component is normalized (into a target range) by outputting an operation command signal to the controller 82 so as to operate a bending device(s) of a work roll(s) / intermediate roll(s) of the F4 stand 40 as a rolling mill on the upstream side of the camera 64 in question and/or the F5 stand 50 as a rolling mill on the downstream side of the camera 64, or so as to operate the pair cross angle in a case of a pair cross rolling mill, or so as to perform a shift operation of a work roll / intermediate roll after predicting center elongation / fringe elongation in advance because it is difficult to perform a shift during rolling in a case of a work roll shift / intermediate roll shift rolling mill.

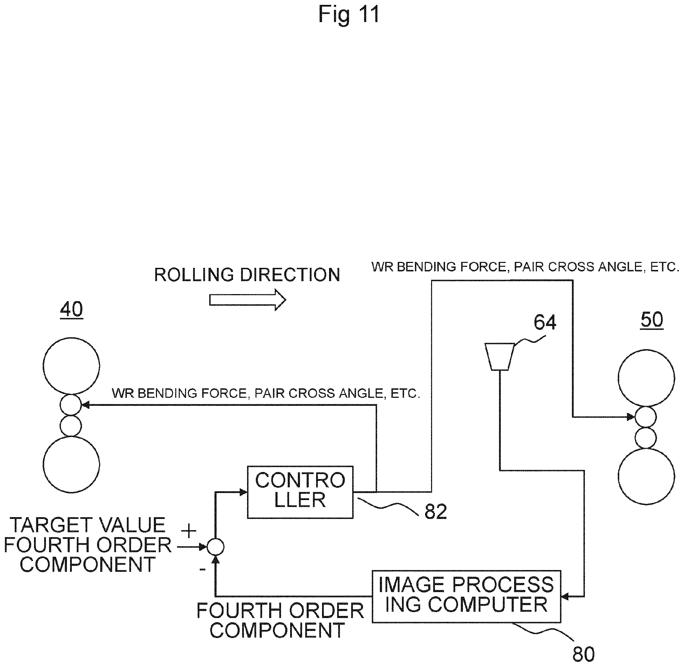

FIG. 11 is a diagram showing a strip shape control block for the fourth order component $C_4$'. The fourth order component $C_4$' indicates quarter elongation. Accordingly, one or more of the following operations are performed to correction the quarter elongation. A bending operation of a bending device(s) of a work roll(s) of the F4 stand 40 as a rolling mill on the upstream side of the camera 64 in question and/or the F5 stand 50 as a rolling mill on the downstream side is performed. Further, in a case of a pair cross mill, the pair cross angle is operated together with the bending operation or singly. In a case of a six-high intermediate roll shift rolling mill, the quarter elongation is predicted in advance, and an operation of shifting an intermediate roll to an appropriate position is performed. The fourth order component indicating the quarter elongation is normalized (into a target range so as to achieve a target strip shape) by outputting an operation command signal to perform a bending operation and a pair cross angle operation to the controller 82. Incidentally, the smaller a roll diameter with respect to a roll length, the more easily the roll is bent in the area of a roll width edge portion by a bending operation, so that the quarter elongation occurs easily. However, the quarter elongation can be normalized by the above-described operation.

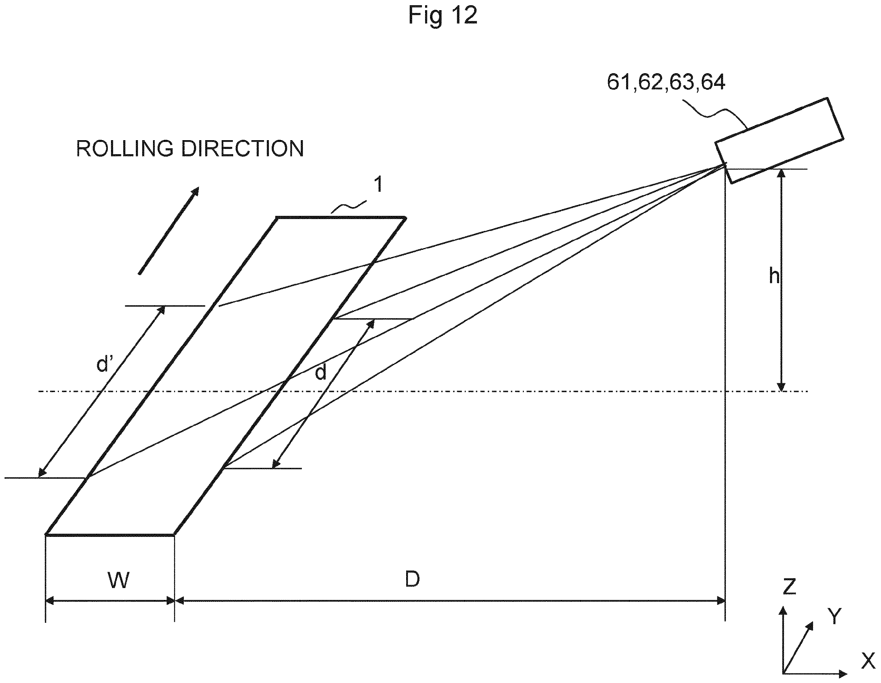

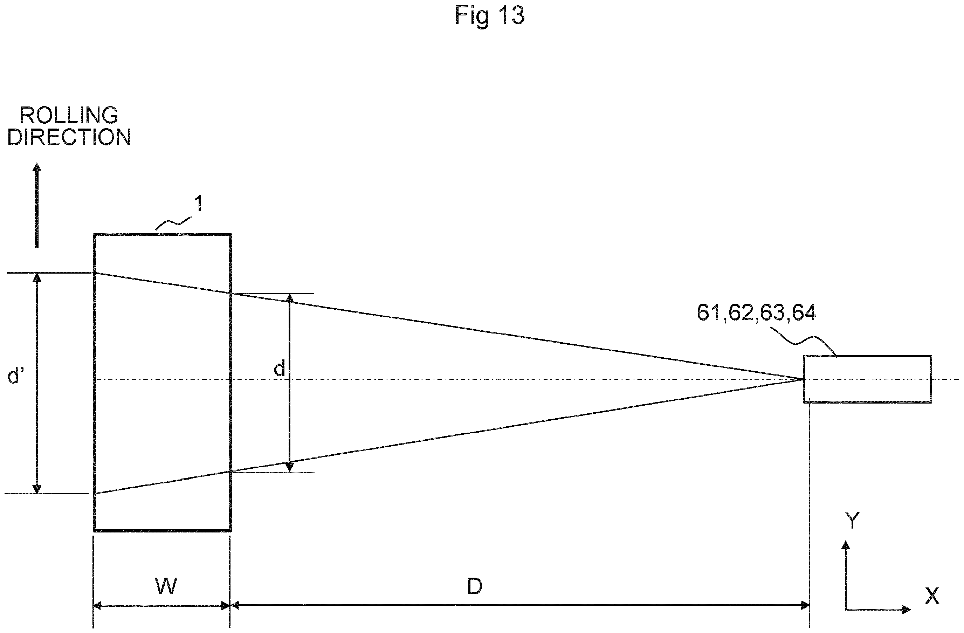

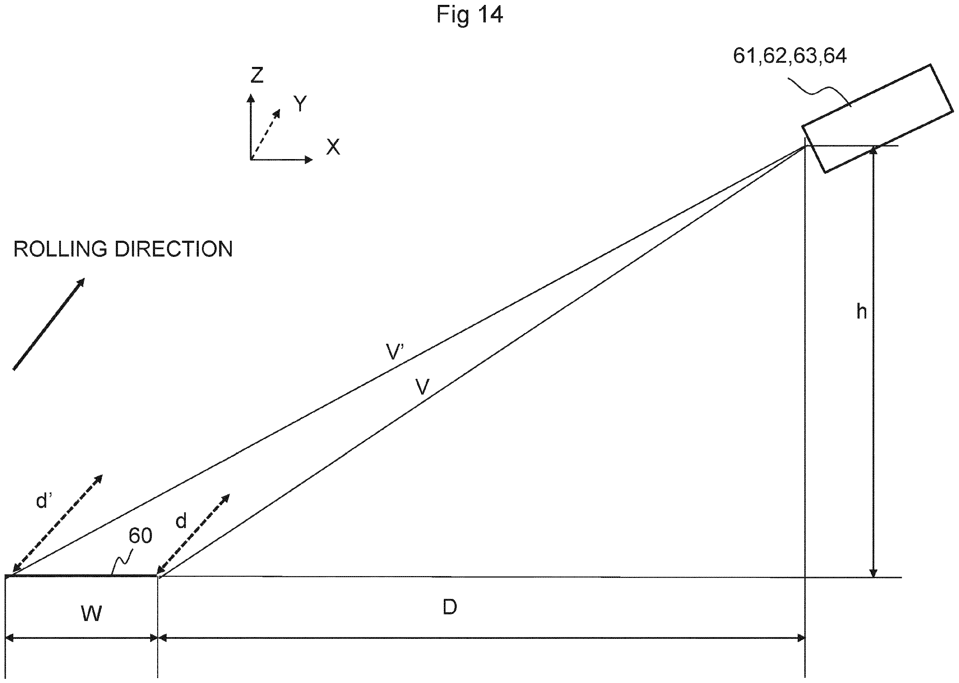

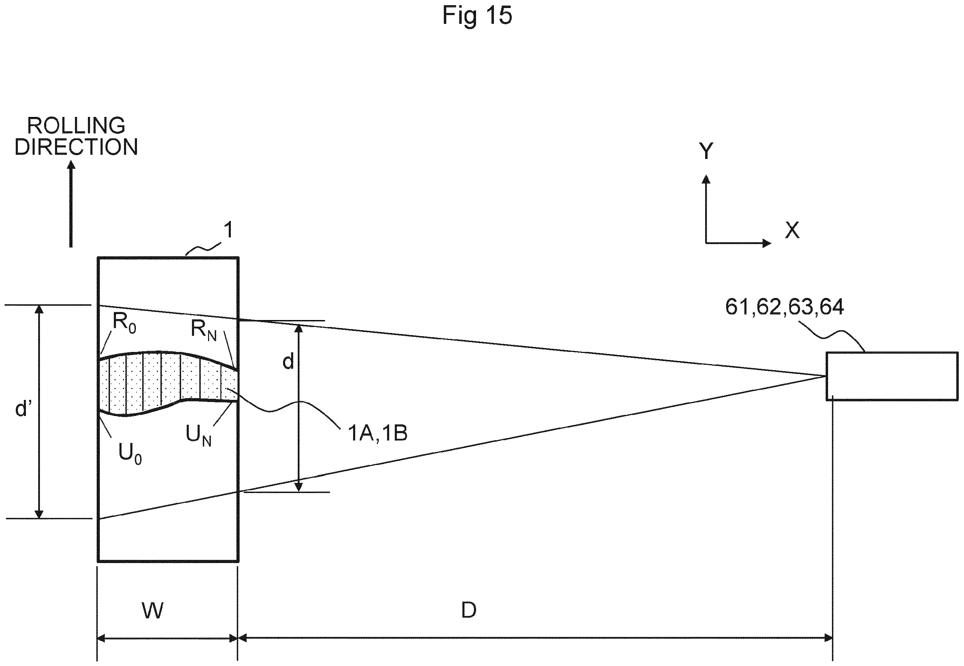

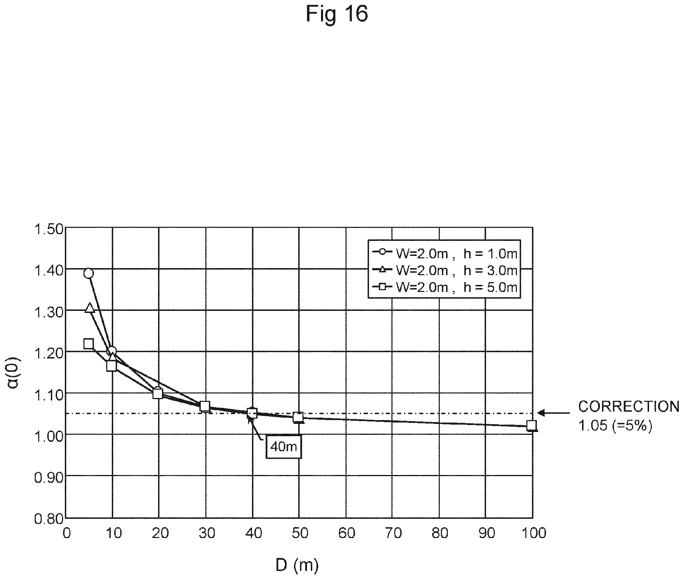

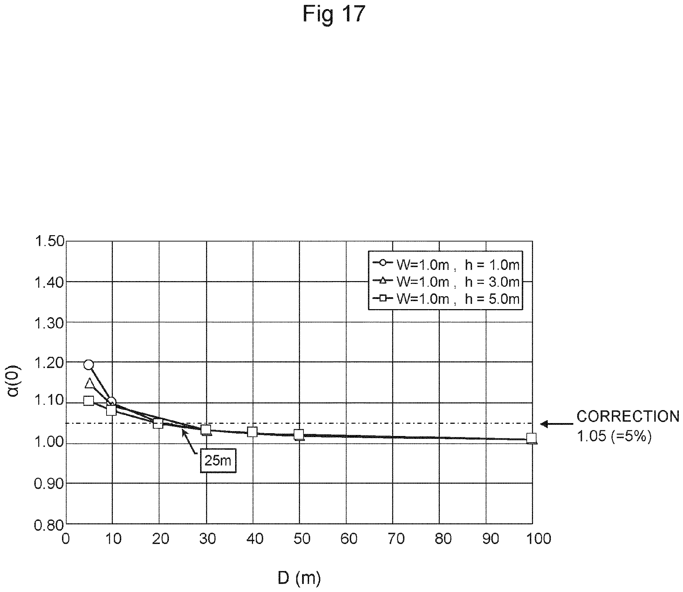

Next, referring to FIGS. 12 to 17, description will be made of details of sensed value correction processing according to an angle between the positions of the metal strip 1 and the camera 61, 62, 63, or 64 in the image processing computer 80. FIG. 12 is a diagram showing an example of arrangement relation between the metal strip and the camera in a three-dimensional space. FIG. 13 is a diagram showing a state in which the metal strip and the camera in FIG. 12 are projected onto an X-Y two-dimensional plane. FIG. 14 is a diagram showing a state in which the metal strip and the camera in FIG. 12 are projected onto an X-Z two-dimensional plane. FIG. 15 is a diagram showing a manner of correction of the boundary line positions of the reflection light area in the strip shape determining apparatus for a metal strip according to the embodiment. FIG. 16 and FIG. 17 are diagrams each showing an example of relation between a distance (D) from the metal strip to the camera and a perspective correction ratio $\alpha(0)$.

As described above, the cameras 61, 62, 63, and 64 are preferably installed on the outside in the strip width direction of the metal strip 1 when the metal strip 1 is viewed from above. Therefore, as shown in FIG. 12, with regard to arrangement relation between the metal strip 1 and a camera 61, 62, 63, or 64 in an X-Y-Z three-dimensional space, the camera 61, 62, 63, or 64 overlooks the metal strip 1 obliquely from above. Incidentally, of X-Y-Z three-dimensional coordinates in FIG. 12, the Y-coordinates represent the rolling direction, the X-coordinates represent the strip width direction of the metal strip 1, and the Z-coordinates represent the thickness direction of the metal strip 1, that is, the vertical direction.

First, consideration will be given by projecting the arrangement relation between the metal strip 1 and the camera 61, 62, 63, or 64 in the three-dimensional space onto a two-dimensional plane (X-Y), as shown in FIG. 13. In this case, with regard to relation between a length d in a Y-direction of the metal strip 1 on a near side visible in an image (visible on a lower side in the image) and a length d' in the Y-direction of the metal strip 1 on a far side visible in the image (visible on an upper side in the image), the lengths d and d' visible in the image are the same (the numbers of pixel points constituting line segments of d and d' are the same), whereas actual lengths can be expressed as in the following Equation (7) on the basis of the distance (D) from the metal strip to the camera and a strip width (W).

$$d'/d = (D + W)/D \qquad ...(7)$$

That is, the length in the Y-direction of the metal strip 1 on the near side visible in the captured image at a position at which the distance from the camera 61, 62, 63, or 64 in an X-direction is D is d, whereas the length in the Y-direction of the metal strip 1 on the far side visible in the captured image at a position at which the distance from the camera 61, 62, 63, or 64 in the X-direction is D + W is d', so that the range actually longer than d is visible in the image.

That is, though the numbers of pixels visible in the image, which constitute the line segments of d' on the far side and d on the near side in the Y-direction of the image, are the same, an actual length corresponding to an interval between pixels adjacent to each other, which are visible in the image, differs according to a position within the image, and therefore the actual length of d' is (D + W)/D times the actual length of d.

With regard to an actual length ratio between intervals between pixels adjacent to each other which are visible in the captured image at the position of D and the position of D + W in the X-direction, when the actual length of the pixel interval at the position of D is set to be 1, the actual length of the pixel interval at the position of D + W is (D + W)/D times the actual length of the pixel interval at the position of D in both of the X-direction and the Y-direction.

Hence, correction is preferably made so as to match the actual length ratio by continuously changing the pixel interval actual length ratio from the position of D to the position of D + W by proportional distribution in a range of 1 to (D + W)/D in both of the X-direction and the Y-direction. That is, this actual length correction is appropriate processing as correction in which perspective is taken into consideration.

Thus, when dividing the area within the image into a plurality of segments in the strip width direction of the metal strip 1, and obtaining one piece of index information of the index information related to the length in the rolling direction such as an area value, an average length in the rolling direction, a median value of lengths in the rolling direction, a total value of the lengths in the rolling direction, or the like in each segment formed by the division, the image processing computer 80 preferably performs correction processing as described above such that the more distant from the camera 61, 62, 63, or 64 a position assumed to be an actual position corresponding to a position visible within the image, the longer a distance between the positions of two points within the image.

Therefore, when the index information is the average length in the rolling direction between the boundary lines on the upstream side and the downstream side of the reflection light area, the median value of the lengths, or the total value of the lengths, the image processing computer 80 performs correction processing in the X-direction and the Y-direction on the index information in each segment as the position assumed to be the actual position corresponding to the position visible within the image becomes distant from the camera 61, 62, 63, or 64 such that a distance between the positions of two pixel points visible in the image is lengthened as the positions of two respective actual points become distant from the camera 61, 62, 63, or 64. More specifically, it can be said that it is preferable to make correction such that a pixel interval visible within the image is lengthened in proportion to an actual distance from the camera 61, 62, 63, or 64 to each position within the image. Also when the index information is the area value of the reflection light area in each divided segment, the actual length correction processing in the X-direction and the Y-direction is preferably performed similarly to the above description.

Next, as shown in FIG. 14, the camera 61, 62, 63, or 64 is disposed at a position higher by h than the metal strip 1 in a Z-direction, that is, a height direction.

When arrangement relation between the metal strip 1 and the camera 61, 62, 63, or 64 in the three-dimensional space in this case is projected onto a two-dimensional plane (X-Z), relation between the length d in the Y-direction of the metal strip 1 on the near side visible in the captured image and the length d' in the Y-direction of the metal strip 1 on the far side visible in the captured image can be expressed as in the following Equation (8) because the camera 61, 62, 63, or 64 is higher by h in the Z-direction.

$$d'/d = V'/V$$

$$V = (D^2 + h^2)^{0.5}$$

$$V' = \{(D + W)^2 + h^2\}^{0.5} \qquad ...(8)$$

Incidentally, suppose that a distance from the camera 61, 62, 63, or 64 to the near side of the metal strip 1 is V, and that a distance from the camera 61, 62, 63, or 64 to the far side of the metal strip 1 is V'.

Supposing that h = 0, Equation (8) described above is the same as Relational Equation (7) between d and d' on the X-Y plane.

Description will next be made of a method of correcting the boundary line positions of the reflection light area 1A or 1B.

As shown in FIG. 15, pixel points constituting the boundary line on the metal strip 1 upstream side of the reflection light area 1A or 1B are defined as $(U_0, U_1, U_2..., U_i, ..., U_N)$, and pixel points constituting the other boundary line (on the metal strip 1 downstream side) of the reflection light area 1A or 1B are defined as $(R_0, R_1, R_2..., R_i, ..., R_N)$.

Supposing that the coordinates of a $U_i$ point within the image among these pixel points are $(U_{ix}, U_{iy})$, and that the coordinates of an $R_i$ point within the image are $(R_{ix}, R_{iy})$ and (i = 0 to N), an interval $L_i$ in the rolling direction of the reflection light area 1A or 1B can be expressed as in the following Equation (9).

$$L_i (U_{ix}, R_{ix}) = R_{iy} - U_{iy} \qquad ...(9)$$

A ratio for correcting pixel intervals from the position of D to the position of D + W to actual lengths changes continuously from 1 to V'/V when considered in the three-dimensional space (X-Y-Z). Thus, the perspective correction ratio $\alpha(i)$ as the actual length ratio of a pixel interval at the position of i can be expressed as in the following Equation (11).

when i = N, $\alpha(N) = 1$
when

$$i = 0, \alpha(0) = V'/V = \{(D + W)^2 + h^2\}^{0.5}/(D^2 + h^2)^{0.5} \qquad ...(10)$$

From this Equation (10), the perspective correction ratio $\alpha(i)$ can be expressed as in the following Equation (11).

$$\alpha(i) = -[\ \{(D + W)^2 + h^2\}^{\ 0.5}/(D^2 + h^2)^{0.5} - 1] \times i/N +\ \{(D + W)^2 + h^2\}^{\ 0.5}/(D^2 + h^2)^{0.5} \qquad ...(11)$$

Hence, Lei obtained by making correction corresponding to an actual length in consideration of the perspective of the interval Li in the rolling direction of the reflection light area can be expressed as in the following Equation (12).

$$Lc_i = \alpha(i) \times\ Li = \alpha(i) \times (R_{iy} - U_{iy}) \qquad ...(12)$$

Generally, with regard to pixel coordinates on an image, a point at an upper left corner of the image is set as a 0 point (origin), a downward direction is set as a positive direction, and a right direction is set as a positive direction.

When points obtained by correcting a pixel coordinate point $U_{ix}$ and a pixel coordinate point $R_{ix}$ on the boundary lines on the upstream side and the downstream side in the rolling direction (Y-axis direction) of the reflection light area so as to correspond to an actual distance in consideration of the perspective are set as a pixel coordinate point $U_{Cix}$ and a pixel coordinate point $R_{Cix}$, respectively, the X-coordinate of the point U on the boundary line on the upstream side is converted as in the following Equation (13).

$$U_{C0x} = U_{0x}$$

(where i = 0)

$$U_{C1x} = (1 - \alpha(0)) \times U_{0x} + \alpha(0) \times U_{1x}$$

(where i = 1)

$$U_{C2x} = (1 - \alpha(0)) \times U_{0x} + (\alpha(0) - \alpha(1)) \times U_{1x} + \alpha(1) \times U_{2x}$$

(where i = 2)

$$U_{C3x} = (1 - \alpha(0)) \times U_{0x} + (\alpha(0) - \alpha(1)) \times U_{1x} + (\alpha(1) - \alpha(2)) \times U_{2x} + \alpha(2) \times U_{3x}$$

(where i = 3)

When the above recurrence formulas are rearranged for i, and consideration is given to i = 2 and onward (i = 2 to N), the X-coordinate of the point U is expressed as follows.

$$U_{C0x} = U_{0x} \qquad (\text{where } i = 0)$$

$$U_{C1x} = (1 - \alpha(0)) \times U_{0x} + \alpha(0) \times U_{1x} \qquad (\text{where } i = 1)$$

$$U_{Cix} = (1 - \alpha(0)) \times U_{0x} + \Sigma^i_{i=2}\ \{\alpha(i - 2) - \alpha(i - 1)\}\ \times U_{(i-1)x} + \alpha(i - 1) \times U_{ix}$$

$$(\text{where } i = 2 \text{ to } N)$$

$$...(13)$$

The X-coordinate of the point R on the boundary line on the downstream side is similarly expressed as in the following Equation (14).

$$R_{C0x} = R_{0x} \quad (\text{where } i = 0)$$

$$R_{C1x} = (1 - \alpha(0)) \times R_{0x} + \alpha(0) \times R_{1x} \quad (\text{where } i = 1)$$

$$R_{Cix} = (1 - \alpha(0)) \times R_{0x} + \Sigma_{i=2}^{i} \{\alpha(i - 2) - \alpha(i - 1)\} \times R_{(i-1)x} + \alpha(i - 1) \times R_{ix}$$

$$(\text{where } i = 2 \text{ to } N)$$

$$...(14)$$

This correction is made in consideration of perspective, and is made such that a distance between two points visible on the image is lengthened so as to correspond to the actual distance as the position becomes more distant from the camera. When divisions are made in the strip width direction, equal divisions (for example seven divisions) are made in the strip width direction on the basis of the pixel coordinate point $U_{Cix}$ and the pixel coordinate point $R_{Cix}$ corrected as described above.

Conversely, the intervals of graduations on an axis applied onto the image may be changed. In a case where such correction is made, and the reflection area on the image is divided in the strip width direction, when graduations of fixed actual length are marked on the image, the graduation intervals become narrower toward the upper side of the image, and the graduation intervals become wider toward the lower side of the image.

The pixels configuring the image are arranged at equal intervals on the upper, lower, left, and right sides. In a case where the reflection light area visible in the image is divided at equal intervals in the strip width direction, the number of pixels arranged in the strip width direction within each divided segment is the same. In a case where the reflection light area is equally divided in the strip width direction on the basis of actual length graduations corrected in consideration of perspective, the number of pixels in the original image, which are arranged in the strip width direction within each divided segment, is smaller toward the far side in the strip width direction (toward the upper side of the image), and is larger toward the near side in the strip width direction (toward the lower side of the image), due to the correction made in consideration of perspective.

Lengths from the boundary line on the upstream side to the boundary line on the downstream side in the rolling direction (Y-axis direction), the lengths corresponding to pixels arranged in the strip width direction (X-axis direction) (specifically, the lengths are the numbers of pixels having a certain luminance or more in the Y-axis direction), are sensed within each divided segment of the reflection light area. A numerical value obtained by dividing a sum total of the lengths by the number of pixels arranged in the strip width direction is an average length, and a length at the center of the lengths when the lengths are arranged in order of size is a median value. In addition, an area value of a divided segment of the reflection area is obtained by integrating actual lengths within the divided segment of the reflection light area on the basis of the actual lengths after the correction made in consideration of perspective, though the calculating method is complex.

From the above, in a case where the index information is an area value, the image processing computer 80 processes the area value of the reflection light area in each segment such that the area value is increased as a position assumed to be an actual position corresponding to a position visible within the image becomes more distant from the camera 61, 62, 63, or 64, that is, as a respective actual segment becomes more distant from the camera 61, 62, 63, or 64. It can be said that as correction processing that increases the area value, the area within the image is preferably processed such that the pixel interval perspective correction ratio $\alpha(i)$ at the position of i is multiplied in both of the X-direction and the Y-direction for an actual distance from the camera 61, 62, 63, or 64 to each position within the image.

Next, description will be made of a suitable installation range for the cameras 61, 62, 63, and 64.

In the present embodiment, with regard to a suitable installation range for the cameras 61, 62, 63, and 64, a camera installation position range is determined from a viewpoint of a necessity of correction in consideration of perspective at a time of application of control on the basis of Equation (10) described above.

For example, assuming that a large effect is not produced on control when an amount of correction within the strip width in the correction is 5% or less, as shown in FIG. 16, when changes in the perspective correction ratio $\alpha(0)$ corresponding to a deviation with respect to an actual length are investigated, it is found that under a condition where the strip width W of the metal strip 1 is 2 m, when the distance D from the metal strip 1 is larger than 40 m, an effect in which the deviation with respect to the actual length exceeds 5% do not occur even when the installation height h of the camera 61, 62, 63, or 64 is changed to 1 m, 3 m, or 5 m. In cases where the distance D from the metal strip 1 is larger than 40 m, at which the effect can be judged to be very small, priority may be given to the ease of processing, and actual correction may not be made. In addition, it is understood that when the distance D from the metal strip 1 is less than 5 m, the amount of correction is increased, and the effect is considered to be large, and that distances less than 5 m are therefore desired to be avoided if possible.

In addition, as shown in FIG. 17, when changes in the perspective correction ratio $\alpha(0)$ corresponding to the deviation with respect to the actual length are investigated, it is found that under a condition where the strip width W of the metal strip 1 is 1 m, when the distance D from the metal strip 1 is larger than 25 m, the amount of correction of the actual length within the strip width is 5% or less, and the installation height h of the camera 61, 62, 63, or 64 does not cause a large effect. In addition, it is understood that when the distance D from the metal strip 1 is less than 5 m, the amount of correction is similarly large, and that distances less than 5 m are therefore desired to be avoided if possible. As for the installation height h, the same description as in the case of the strip width of 2 m applies. Also in this case, when the distance D from the metal strip 1 is larger than 25 m, priority may be given to the ease of processing, and actual correction may not be made. Incidentally, the installation position of the camera 61, 62, 63, or 64 may be made distant from the metal strip in order to make do with simple processing without making correction.

Conversely, when described from a viewpoint of a necessity of correction, it is understood that in the case of the strip width W of 2 m, the correction in consideration of perspective is to be made when a horizontal distance from the metal strip 1 to the camera 61, 62, 63, or 64 is 40 m or less, and that in the case of the strip width W of 1 m, the correction in consideration of perspective is preferably made when the distance from the metal strip 1 to the camera 61, 62, 63, or 64 is 25 m or less.

According to the above description, with regard to positional relation between the metal strip 1 and the camera 61, 62, 63, or 64, for which the correction in consideration of perspective is to be made, the camera 61, 62, 63, or 64 is preferably disposed at a distance equal to or more than 5 m and equal to or less than 40 m from the strip edge of the metal strip 1, from the relations in FIG. 16 and FIG. 17.

As for the height h, it is understood that the range considered in FIG. 16 and FIG. 17 is a suitable range, and therefore the height h is preferably set to be a height equal to or more than 1 m and equal to or less than 5 m from the metal strip 1.

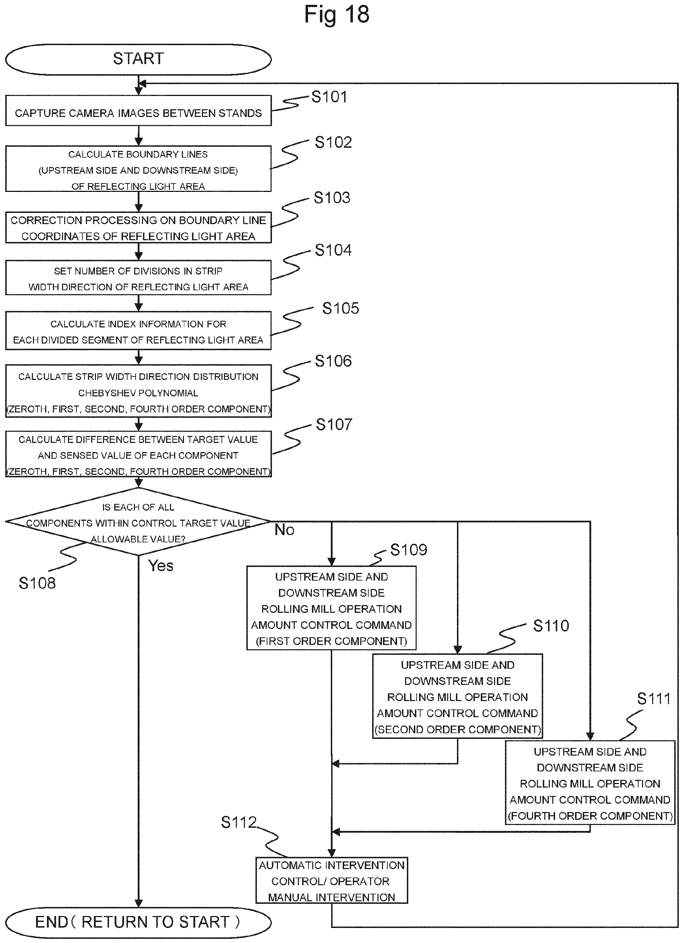

Next, referring to FIG. 18, description will be made of a flow of a method of determining the strip shape of the metal strip according to the present embodiment, the method being preferably performed by the above-described strip shape determining apparatus for a metal strip. FIG. 18 is a diagram showing a flow of sensing and control of the strip shape in the strip shape determining apparatus for a metal strip according to the embodiment.

First, the image processing computer 80 captures images captured by the cameras 61, 62, 63, and 64 between the stands, that is, the F1 stand 10, the F2 stand 20, the F3 stand 30, the F4 stand 40, and the F5 stand 50 (step S101).

Next, the image processing computer 80 calculates boundary lines on the upstream side and the downstream side in the rolling direction of the reflection light area 1A or 1B by image processing (step S102).

Next, the image processing computer 80 performs correction processing in the X-direction (Ucix) and (Rcix) on the boundary lines of the reflection light area 1A or 1B, which are calculated in step S102, and performs correction processing (Lci) on a distance between the boundary lines in the Y-direction of the reflection light area (step S103). Suppose that the correction processing in this step S103 is preferably based on the above-described Equations (12), (13), and (14).

Next, the image processing computer 80 sets the number of divisions in the strip width direction of the reflection light area of the metal strip 1 (step S104). The number of divisions to be set is preferably selected from odd numbers more than 4, as described above.

Next, the image processing computer 80 obtains distances or an area between the boundary lines on the upstream side and the downstream side in the rolling direction of the reflection light area, and calculates index information of each divided segment from these distances or the area (an average value or a median value of the distances, the area, or the like) (step S105).

Next, the image processing computer 80 calculates a distribution of the index information in the strip width direction of the metal strip 1, and obtains coefficients of the Chebyshev polynomial (the zeroth order component, the first order component, the second order component, and the fourth order component) (step S106).

Next, the image processing computer 80 calculates a difference between a target value and a sensed value of each component of the coefficients of the Chebyshev polynomial (step S107).

Next, the image processing computer 80 determines whether or not the respective components of the coefficients of the Chebyshev polynomial are all within a control target value allowable value (step S108). When determining that all are within the control target value allowable value, the image processing computer 80 completes the processing, and repeats this sensing and control flow from the beginning. When determining that one or more of the respective components of the coefficients of the Chebyshev polynomial are larger than the control target value allowable value, on the other hand, the image processing computer 80 shifts the processing to step S109, S110, or S111.

Next, when the image processing computer 80 determines in step S108 that the first order component is larger than the allowable value, the image processing computer 80 generates control command signals of operation amounts for the stands on the upstream side and the downstream side of the camera 61, 62, 63, or 64 that has captured the corresponding image, and outputs the control command signals to the controller 82, or/and generates a display command signal for the monitor 85 and outputs the display command signal (step S109). Incidentally, the signal of the zeroth order component does not necessarily need to be output. This is because control or operation on the basis of the zeroth order component is not performed.

In addition, when the image processing computer 80 determines in step S108 that the second order component is larger than the allowable value, the image processing computer 80 generates a control command signal of an operation amount for the stand on the upstream side of the camera 61, 62, 63, or 64 that has captured the corresponding image, and outputs the control command signal to the controller 82, or/and generates a display command signal for the monitor 85 and outputs the display command signal (step S110).

Next, when the image processing computer 80 determines in step S108 that the fourth order component is larger than the allowable value, the image processing computer 80 generates a control command signal of an operation amount for the stand on the upstream side of the camera 61, 62, 63, or 64 that has captured the corresponding image, and outputs the control command signal to the controller 82, or/and generates a display command signal for the monitor 85 and outputs the display command signal (step S111).

Next, intervention control is automatically performed by the controller 82, or the content of intervention control (intervention control guidance) or a screen as shown in FIG. 8 is displayed on the monitor 85 to request the operator to determine whether to apply manual intervention (step S112). Thereafter, the image processing computer 80 returns the processing to step S101, captures the camera images again, and makes adjustment so that the respective components of the coefficients of the Chebyshev polynomial all fall within the control target value allowable value.

Effects of the present embodiment will next be described.

The above-described strip shape determining apparatus for a rolled metal strip 1 according to the present embodiment includes: the cameras 61, 62, 63, and 64 that are installed so as to capture images including areas where band shaped reflection light that crosses the rolled metal strip 1 in the strip width direction is visible; and the image processing computer 80 that determines the strip shape of the metal strip 1 on the basis of the images captured by the cameras 61, 62, 63, and 64. The image processing computer 80 divides the area in each image into a plurality of segments in the strip width direction of the metal strip 1, and on the basis of the index information representing an area-related size of each segment formed by the division, transfers, as a signal, information corresponding to the distribution in the strip width direction of strip elongation in the rolling direction.

Hence, a parameter providing a large amount of information such as the band-shaped reflection light or the like is used in place of a parameter providing a small amount of information such as linear reflection light of a metal band shape. Further, because strip elongation is determined by using information about the whole of the reflection light part rather than being based on only data on a part of the reflection light area 1A or 1B, strip elongation can be sensed with excellent accuracy even when the reflection light is somewhat affected by a disturbance.

In addition, the index information is an average length in the rolling direction, a median value of lengths in the rolling direction, or an area value in the reflection light area divided segment, which are calculated for each pixel unit in the strip width direction in the reflection light area divided divisions. Thus, an accuracy of the index information in a practical range is obtained.

Supposing that a value indicating the central position in the strip width direction of each of the reflection light area divided segments is variable (x), the image processing computer 80 converts the position in the strip width direction of the area within the image into a range of $-1 \leq x \leq 1$. The image processing computer 80 first calculates a coefficient vector ($C_0$, $C_1$, $C_2$, $C_4$) of each component by using a function expressed by $E(x) = C_0 + C_1 \times x + C_2 \times x^2 + C_4 \times x^4$ including only a fourth order term, a second order term, a first order term, and a zeroth order term of x, the index information in each divided segment being set as a distribution ($E(x)$) of each divided segment in the function. Thereafter, the image processing computer 80 assumes that the Chebyshev polynomial expressed by $E(x) = C_0' + C_1' \times x + C_2' \times (2x^2 - 1) + C_4' \times (8x^4 - 8x^2 + 1)$ and the above-described equation are equivalent equations, obtains a Chebyshev polynomial coefficient vector ($C_0'$, $C_1'$, $C_2'$, $C_4'$) as each component, and transfers the Chebyshev polynomial coefficient vector as a signal representing the strip shape. Thus, the strip shape reflected in the area value, the average length in the rolling direction, or the median value of the lengths in the rolling direction in each of the plurality of segments divided in the strip width direction of the metal strip 1 can be recognized in a state of being resolved into the first order component, the second order component, and the fourth order component of the Chebyshev polynomial. An effect of facilitating taking action to normalize the strip shape (into a target range) is consequently obtained.

In addition, the image processing computer 80 transfers the signal to the monitor 85 so as to display figures of functions of the respective order terms in Equation (1). Consequently, when the figures are displayed on the screen watched by the operator, the operator can determine and perform an operation for normalizing the strip shape into a target range for each order component, and can take appropriate action more easily than conventional.

Further, the camera 61, 62, 63, or 64 is disposed on the outside in the strip width direction of the metal strip 1 as viewed from above, and the image processing computer 80 performs processing such that the more distant from the camera 61, 62, 63, or 64 a position assumed to be an actual position of the metal strip 1, the actual position corresponding to a position visible within the image, the longer a distance between positions within the image. Thus, the camera 61, 62, 63, or 64 is installed at a place separated to a certain degree from the rolling mill, and an effect of easy maintenance and inspection is obtained because of a work space secured and closeness to a monitoring room. In addition, in this case, the more distant from the camera 61, 62, 63, or 64 the band shaped reflection light area 1A or 1B of the metal strip 1 within the image is, the smaller the band shaped reflection light area 1A or 1B appears, and on the strip edge side more distant from the camera 61, 62, 63, or 64, even a same distance interval or an object of a same size is visible in the image so as to be a closer distance or smaller than on the strip edge side closer to the camera 61, 62, 63, or 64. The sensing of the distance and size of the area of the reflection light may cause an unignorable error when based on the distance and size of the image as it is. However, by processing image information such that the more distant from the camera 61, 62, 63, or 64 the image of the reflection light area 1A or 1B visible within the image, the longer a distance between points, it is possible to reduce a difference in positional information of the reflection light from the metal strip 1 within the image irrespective of the arrangement position of the camera 61, 62, 63, or 64 even when the camera 61, 62, 63, or 64 is disposed at a position separated outward from the strip edge as viewed from the upper surface of the metal strip 1. Thus, the Chebyshev polynomial coefficient vector ($C_0'$, $C_1'$, $C_2'$, $C_4'$) as each order term component is obtained with high accuracy, and highly accurate strip shape determination can be made.

In addition, the image processing computer 80 processes the area value of the index information in each segment such that the area value is increased as a position assumed to be an actual position corresponding to a position visible within the image becomes more distant from the camera 61, 62, 63, or 64, that is, as a respective actual segment becomes more distant from the camera 61, 62, 63, or 64, or performs correction processing such that an average length in the rolling direction or a median value of lengths in the rolling direction in the index information in each segment is increased as the position assumed to be the actual position corresponding to the position visible within the image becomes more distant from the camera 61, 62, 63, or 64, that is, as the respective actual segment becomes more distant from the camera 61, 62, 63, or 64. Thus, more accurate index information of the reflection light area 1A or 1B can be obtained, and a further improvement in strip shape sensing accuracy can be achieved.

Further, as processing of increasing the area value, the image processing computer 80 processes the area within the image such that the area value is increased as the assumed position becomes more distant from the camera in both of the rolling direction and the strip width direction at each position within the image from the camera 61, 62, 63, or 64. As processing of increasing the average length in the rolling direction or the median value of the lengths in the rolling direction, the image processing computer 80 performs correction processing such that the average length in the rolling direction or the median value of the lengths in the rolling direction is increased as each position within the image from the camera 61, 62, 63, or 64 becomes more distant from the camera. Thus, the above-described actions and effects can be exerted reliably by computation based on clear principles.

In addition, a deviation with respect to an actual length is determined in relation to the horizontal distance D from the metal strip 1 to the camera 61, 62, 63, or 64. Thus, $\alpha(0)$ of Equation (10) is obtained, and supposing that a threshold value of the deviation with respect to the actual length is for example 5%, actual length correction is made when 5% is exceeded. The Chebyshev polynomial coefficient vector ($C_0'$, $C_1'$, $C_2'$, $C_4'$) as each order term component is consequently obtained with high accuracy, and the camera 61, 62, 63, or 64 can be installed at a position separated from the metal strip 1, which is practical from a viewpoint of the securing of a space for maintenance and inspection and ease of access. A distance between positions within the image can also be corrected in a practical range.

<Others>

It is to be noted that the present invention is not limited to the foregoing embodiments, but is susceptible of various modifications and applications. The foregoing embodiments have been described in detail in order to describe the present invention in an easily understandable manner, and are not necessarily limited to including all of the described configurations.

**Claims**

1. A strip shape determining apparatus for a rolled metal strip (1), the strip shape determining apparatus comprising:

   a camera (61, 62, 63, 64) that is installed so as to capture an image including an area where band shaped reflection light that crosses a surface of the rolled metal strip (1) in a strip width direction is visible; and
   an image processing unit (80) that determines a strip shape of the metal strip (1) on a basis of the image captured by the camera (61, 62, 63, 64),
   the image processing unit (80) dividing the area within the image into a plurality of segments in the strip width direction of the metal strip (1), converting a position in the strip width direction within a strip width range of the area within the image into a range of $-1 \leq x \leq 1$ supposing that a value indicating a strip width direction position of each of the segments formed by the division is a variable (x), and obtaining coefficients ($C_0'$, $C_1'$, $C_2'$, and $C_4'$) of a Chebyshev polynomial of a following Equation (1) by applying index information indicating a size of the area in each segment formed by the division to the Chebyshev polynomial including only a zeroth order term, a first order term, a second order term, and a fourth order term of x, the Chebyshev polynomial having the index information as a distribution E(x) of each of the segments, and transferring, as a determination result signal of a strip elongation distribution in the strip width direction, one or more of the coefficients including a zeroth order coefficient ($C_0$'), a first order coefficient ($C_1$'), a second order coefficient ($C_2$'), and a fourth order coefficient ($C_4$') as information corresponding to the distribution in the strip width direction of strip elongation in a rolling direction.

$$E(x) = C_0' + C_1' \times x + C_2' \times (2x^2 - 1) + C_4' \times (8x^4 - 8x^2 + 1) \text{ where } -1 \leq x \leq 1 \qquad (1)$$

2. The strip shape determining apparatus for a metal strip (1) according to claim 1, wherein the index information is an average length in the rolling direction, a median value of lengths in the rolling direction, or an area in each of the segments, the average length, the median value, or the area being calculated for each pixel unit in the strip width direction in the segments.

3. The strip shape determining apparatus for a metal strip (1) according to claim 2, wherein the image processing unit (80) transfers a display signal to a display device (85) to display, among figures of functions of terms of a zeroth order component ($C_0$'), a first order component ($C_1' \times x$), a second order component ($C_2' \times (2x^2 - 1)$), and a fourth order component ($C_4' \times (8x^4 - 8x^2 + 1)$) in the Equation (1), a figure(s) of one or more order components related to the coefficient(s) to be transferred as the determination result signal.

4. The strip shape determining apparatus for a metal strip (1) according to any one of claims 1 to 3, wherein

the camera (61, 62, 63, 64) is disposed on an outside in the strip width direction of the metal strip (1) as viewed from above, and
the image processing unit (80) performs correction processing such that the more distant from the camera (61, 62, 63, 64) a position assumed to be an actual position corresponding to a position visible within the image, the longer a distance between positions of two points within the image.

5. The strip shape determining apparatus for a metal strip (1) according to claim 4, wherein the image processing unit (80) decreases, as the correction processing, graduation intervals of a two-dimensional axis applied onto the image as the position assumed to be the actual position corresponding to the position visible within the image becomes more distant from the camera (61, 62, 63, 64).

6. The strip shape determining apparatus for a metal strip (1) according to any one of claims 1 to 3, wherein

the camera (61, 62, 63, 64) is disposed on an outside in the strip width direction of the metal strip (1) as viewed from above, and
the image processing unit (80), in calculating an average length in the rolling direction or a median value of lengths in the rolling direction in the index information in each of the segments, processes the lengths in the rolling direction of the area such that the lengths are increased in proportion to increasing distance of a position assumed to be an actual position corresponding to a position visible within the image from the camera (61, 62, 63, 64).

7. The strip shape determining apparatus for a metal strip (1) according to any one of claims 4 to 6, wherein the camera (61, 62, 63, 64) is disposed at a height equal to or more than 1 m and equal to or less than 5 m from the metal strip (1) and at a distance equal to or more than 5 m and equal to or less than 40 m from a strip edge of the metal strip (1).

8. A rolling mill comprising:

the strip shape determining apparatus for a metal strip (1) according to any one of claims 1 to 7; and
a controller (82),
the controller transferring one or more operation signals related to a leveling amount, a bending force, or a pair cross angle of the rolling mill on a basis of the determination result signal.

9. A strip shape determination method for a rolled metal strip (1), the strip shape determination method comprising:

a capturing step of capturing, by a camera (61, 62, 63, 64), an image including an area where band shaped reflection light that crosses the rolled metal strip (1) in a strip width direction is visible; and

an image processing step of determining a strip shape of the metal strip (1) on a basis of the image captured in the capturing step,

the image processing step dividing the area within the image into a plurality of segments in the strip width direction of the metal strip (1), converting a position in the strip width direction of the area within the image into a range of $-1 \leq x \leq 1$ supposing that a value indicating a central position in the strip width direction of each of the segments formed by the division is a variable (x), and obtaining a Chebyshev polynomial coefficient vector $(C_0', C_1', C_2', C_4')$ by applying index information indicating a size of the area in each segment formed by the division to a Chebyshev polynomial of a following Equation (1) including only a zeroth order term, a first order term, a second order term, and a fourth order term, the Chebyshev polynomial having the index information in each of the segments as a distribution $E(x)$ of each of the segments, and transferring, as a determination result signal of a strip elongation distribution in the strip width direction, one or more of coefficients including a zeroth order coefficient $(C_0')$, a first order coefficient $(C_1')$, a second order coefficient $(C_2')$, and a fourth order coefficient $(C_4')$ as information corresponding to the distribution in the strip width direction of strip elongation in a rolling direction.

$$E(x) = C_0' + C_1' \times x + C_2' \times (2x^2 - 1) + C_4' \times (8x^4 - 8x^2 + 1) \text{ where } -1 \leq x \leq 1 \qquad (1)$$

10. The strip shape determination method for a metal strip (1) according to claim 9, wherein as the index information, an average length in the rolling direction, a median value of lengths in the rolling direction, or an area in each of the segments is calculated for each pixel unit in the strip width direction in the segments.

11. The strip shape determination method for a metal strip (1) according to claim 9, wherein the image processing step transfers a display signal to a display device (85) to display, among figures of functions of terms of a zeroth order component $(C_0')$, a first order component $(C_1' \times x)$, a second order component $(C_2' \times (2x^2 - 1))$, and a fourth order component $(C_4' \times (8x^4 - 8x^2 + 1))$ in the Equation (1), a figure(s) of one or more order components related to the coefficient(s) to be transferred as the determination result signal.

12. The strip shape determination method for a metal strip (1) according to any one of claims 9 to 11, wherein

using the camera (61, 62, 63, 64) disposed on an outside in the strip width direction of the metal strip (1) as viewed from above,
the image processing unit (80) performs correction processing such that the more distant from the camera (61, 62, 63, 64) a position assumed to be an actual position corresponding to a position visible within the image, the longer a distance between positions of two points within the image.

13. The strip shape determination method for a metal strip (1) according to any one of claims 9 to 11, wherein

the camera (61, 62, 63, 64) is disposed on an outside in the strip width direction of the metal strip (1) as viewed from above, and
the image processing step, in calculating an average length in the rolling direction or a median value of lengths in the rolling direction in the index information, processes the lengths in the rolling direction of the area such that the lengths are increased in proportion to increasing distance of a position assumed to be an actual position corresponding to a position visible within the image from the camera (61, 62, 63, 64).

**Patentansprüche**

1. Bandform-Bestimmungsvorrichtung für ein gewalztes Metallband (1), wobei die Bandform-Bestimmungsvorrichtung Folgendes aufweist:

eine Kamera (61, 62, 63, 64), die installiert ist, um ein Bild aufzunehmen, das einen Bereich aufweist, in dem bandförmiges Reflexionslicht, das die Oberfläche des gewalzten Metallbands (1) in Breitenrichtung kreuzt, sichtbar ist, und
eine Bildverarbeitungseinheit (80), welche die Form des Metallbands (1) auf der Grundlage des von der Kamera (61, 62, 63, 64) aufgenommenen Bilds bestimmt,

wobei die Bildverarbeitungseinheit (80) den Bereich innerhalb des Bilds in Breitenrichtung des Metallbands (1) in mehrere Segmente unterteilt, eine Position in Bandbreitenrichtung innerhalb eines Bandbreitenbereichs des sich innerhalb des Bilds befindenden Bereichs unter der Annahme, dass ein Wert, der die Position jedes der durch die Unterteilung gebildeten Segmente in Bandbreitenrichtung angibt, eine Variable (x) ist, in einen Bereich von $-1 \leq x \leq 1$ wandelt und Koeffizienten ($C_0$', $C_1$', $C_2$' und $C_4$') eines Tschebyscheff-Polynoms nach der folgenden Gleichung (1) durch Anwenden von Indexinformationen, welche die Größe des in jedem Segment durch die Unterteilung gebildeten Bereichs angeben, auf das Tschebyscheff-Polynom, das nur einen Term nullter Ordnung, einen Term erster Ordnung, einen Term zweiter Ordnung und einen Term vierter Ordnung von x aufweist, erhält, wobei das Tschebyscheff-Polynom die Indexinformationen als Verteilung $E(x)$ jedes der Segmente aufweist, und als Bestimmungsergebnissignal der Banddehnungsverteilung in Bandbreitenrichtung einen oder mehrere der Koeffizienten, einschließlich eines Koeffizienten nullter Ordnung ($C_0$'), eines Koeffizienten erster Ordnung ($C_1$'), eines Koeffizienten zweiter Ordnung ($C_2$') und eines Koeffizienten vierter Ordnung ($C_4$'), als der in Bandbreitenrichtung angegebenen Verteilung der Banddehnung in Walzrichtung entsprechende Informationen überträgt.

$$E(x) = C_0' + C_1' \times x + C_2' \times (2x^2 - 1) + C_4' \times (8x^4 - 8x^2 + 1) \text{ mit } -1 \leq x \leq 1 \qquad (1)$$

2. Bandform-Bestimmungsvorrichtung für ein Metallband (1) nach Anspruch 1, wobei die Indexinformation die durchschnittliche Länge in Walzrichtung, der Medianwert der Längen in Walzrichtung oder die Fläche in jedem der Segmente, die durchschnittliche Länge, der Medianwert oder die Fläche, die oder der für jede Pixeleinheit in Bandbreitenrichtung in den Segmenten berechnet wurde, ist.

3. Bandform-Bestimmungsvorrichtung für ein Metallband (1) nach Anspruch 2, wobei die Bildverarbeitungseinheit (80) ein Anzeigesignal zu einer Anzeigevorrichtung (85) überträgt, um von Funktionsgraphiken von Termen einer Komponente nullter Ordnung ($C_0$'), einer Komponente erster Ordnung ($C_1' \times x$), einer Komponente zweiter Ordnung ($C_2' \times (2x^2 - 1)$) und einer Komponente vierter Ordnung ($C_4' \times (8x^4 - 8x^2 + 1)$) in Gleichung (1) eine oder mehrere Graphiken von Komponenten einer oder mehrerer Ordnungen in Bezug auf den einen oder die mehreren Koeffizienten, die als Bestimmungsergebnissignal zu übertragen sind, anzuzeigen.

4. Bandform-Bestimmungsvorrichtung für ein Metallband (1) nach einem der Ansprüche 1 bis 3, wobei

die Kamera (61, 62, 63, 64) in Breitenrichtung des Metallbands (1) bei Betrachtung von oben außen angeordnet ist und
die Bildverarbeitungseinheit (80) eine Korrekturverarbeitung ausführt, so dass, je weiter sich eine Position, von der angenommen wird, dass es sich dabei um eine einer innerhalb des Bilds sichtbaren Position entsprechende tatsächliche Position handelt, von der Kamera (61, 62, 63, 64) entfernt befindet, desto größer der Abstand zwischen Positionen zweier Punkte innerhalb des Bilds ist.

5. Bandform-Bestimmungsvorrichtung für ein Metallband (1) nach Anspruch 4, wobei die Bildverarbeitungseinheit (80) bei der Korrekturverarbeitung Abstufungsintervalle einer auf das Bild angewendeten zweidimensionalen Achse verringert, wenn die Position, von der angenommen wird, dass es sich dabei um die der innerhalb des Bilds sichtbaren Position entsprechende tatsächliche Position handelt, weiter entfernt von der Kamera (61, 62, 63, 64) liegt.

6. Bandform-Bestimmungsvorrichtung für ein Metallband (1) nach einem der Ansprüche 1 bis 3, wobei

die Kamera (61, 62, 63, 64) in Breitenrichtung des Metallbands (1) bei Betrachtung von oben außen angeordnet ist und
die Bildverarbeitungseinheit (80) bei der Berechnung der durchschnittlichen Länge in Walzrichtung oder des Medianwerts der Längen in Walzrichtung in den Indexinformationen in jedem der Segmente die Längen in Walzrichtung des Bereichs so verarbeitet, dass sie proportional zum zunehmenden Abstand einer Position, von der angenommen wird, dass es sich dabei um eine einer innerhalb des Bilds sichtbaren Position entsprechende tatsächliche Position handelt, von der Kamera (61, 62, 63, 64) vergrößert werden.

7. Bandform-Bestimmungsvorrichtung für ein Metallband nach einem der Ansprüche 4 bis 6, wobei die Kamera (61, 62, 63, 64) in einer Höhe von wenigstens 1 m und höchstens 5 m vom Metallband (1) und in einem Abstand von wenigstens 5 m und höchstens 40 m vom Rand des Metallbands (1) angeordnet ist.

8. Walzwerk, aufweisend:

   die Bandform-Bestimmungsvorrichtung für ein Metallband (1) nach einem der Ansprüche 1 bis 7 und eine Steuereinrichtung (82),
   wobei die Steuereinrichtung ein oder mehrere Betätigungssignale in Bezug auf einen Nivellierungsbetrag, eine Biegekraft oder einen Paarquerwinkel des Walzwerks auf der Grundlage des Bestimmungsergebnissignals überträgt.

9. Bandform-Bestimmungsverfahren für ein gewalztes Metallband (1), wobei das Bandform-Bestimmungsverfahren Folgendes aufweist:

   einen Aufnahmeschritt zur Aufnahme eines Bilds, das einen Bereich aufweist, in dem bandförmiges Reflexionslicht, welches das gewalzte Metallband (1) in Bandbreitenrichtung kreuzt, sichtbar ist, durch eine Kamera (61, 62, 63, 64) und
   einen Bildverarbeitungsschritt zum Bestimmen der Form des Metallbands (1) auf der Grundlage des im Aufnahmeschritt aufgenommenen Bilds,
   wobei der Bildverarbeitungsschritt den Bereich innerhalb des Bilds in Breitenrichtung des Metallbands (1) in mehrere Segmente unterteilt, eine Position in Bandbreitenrichtung innerhalb eines Bandbreitenbereichs des sich innerhalb des Bilds befindenden Bereichs unter der Annahme, dass ein Wert, der die Position jedes der durch die Unterteilung gebildeten Segmente in Bandbreitenrichtung angibt, eine Variable ($x$) ist, in einen Bereich von $-1 \leq x \leq 1$ wandelt und Koeffizienten ($C_0'$, $C_1'$, $C_2'$ und $C_4'$) eines Tschebyscheff-Polynoms nach der folgenden Gleichung (1) durch Anwenden von Indexinformationen, welche die Größe des in jedem Segment durch die Unterteilung gebildeten Bereichs angeben, auf das Tschebyscheff-Polynom, das nur einen Term nullter Ordnung, einen Term erster Ordnung, einen Term zweiter Ordnung und einen Term vierter Ordnung von $x$ aufweist, erhält, wobei das Tschebyscheff-Polynom die Indexinformationen als Verteilung $E(x)$ jedes der Segmente aufweist, und als Bestimmungsergebnissignal der Banddehnungsverteilung in Bandbreitenrichtung einen oder mehrere der Koeffizienten, einschließlich eines Koeffizienten nullter Ordnung ($C_0'$), eines Koeffizienten erster Ordnung ($C_1'$), eines Koeffizienten zweiter Ordnung ($C_2'$) und eines Koeffizienten vierter Ordnung ($C_4'$), als der in Bandbreitenrichtung angegebenen Verteilung der Banddehnung in Walzrichtung entsprechende Informationen überträgt.

$$E(x) = C_0' + C_1' \times x + C_2' \times (2x^2 - 1) + C_4' \times (8x^4 - 8x^2 + 1) \text{ mit } -1 \leq x \leq 1 \quad (1)$$

10. Bandform-Bestimmungsverfahren für ein Metallband (1) nach Anspruch 9, wobei als Indexinformation die durchschnittliche Länge in Walzrichtung, der Medianwert der Längen in Walzrichtung oder die Fläche in jedem der Segmente für jede Pixeleinheit in Bandbreitenrichtung in den Segmenten berechnet wird.

11. Bandform-Bestimmungsverfahren für ein Metallband (1) nach Anspruch 9, wobei der Bildverarbeitungsschritt ein Anzeigesignal zu einer Anzeigevorrichtung (85) überträgt, um von Funktionsgraphiken von Termen einer Komponente nullter Ordnung ($C_0'$), einer Komponente erster Ordnung ($C_1' \times x$), einer Komponente zweiter Ordnung ($C_2' \times (2x^2 - 1)$) und einer Komponente vierter Ordnung ($C_4' \times (8x^4 - 8x^2 + 1)$) in Gleichung (1) eine oder mehrere Graphiken von Komponenten einer oder mehrerer Ordnungen in Bezug auf den einen oder die mehreren Koeffizienten, die als Bestimmungsergebnissignal zu übertragen sind, anzuzeigen.

12. Bandform-Bestimmungsverfahren für ein Metallband (1) nach einem der Ansprüche 9 bis 11, wobei

    unter Verwendung der Kamera (61, 62, 63, 64), die sich in Breitenrichtung des Metallbands (1) bei Betrachtung von oben außen befindet,
    die Bildverarbeitungseinheit (80) eine Korrekturverarbeitung ausführt, so dass, je weiter sich eine Position, von der angenommen wird, dass es sich dabei um eine einer innerhalb des Bilds sichtbaren Position entsprechende tatsächliche Position handelt, von der Kamera (61, 62, 63, 64) entfernt befindet, desto größer der Abstand zwischen Positionen zweier Punkte innerhalb des Bilds ist.

13. Bandform-Bestimmungsverfahren für ein Metallband (1) nach einem der Ansprüche 9 bis 11, wobei

    die Kamera (61, 62, 63, 64) in Breitenrichtung des Metallbands (1) bei Betrachtung von oben außen angeordnet ist und

der Bildverarbeitungsschritt bei der Berechnung der durchschnittlichen Länge in Walzrichtung oder des Medianwerts der Längen in Walzrichtung in den Indexinformationen in jedem der Segmente die Längen in Walzrichtung des Bereichs so verarbeitet, dass sie proportional zum zunehmenden Abstand einer Position, von der angenommen wird, dass es sich dabei um eine einer innerhalb des Bilds sichtbaren Position entsprechende tatsächliche Position handelt, von der Kamera (61, 62, 63, 64) vergrößert werden.

## Revendications

1. Appareil de détermination de forme de bande pour une bande métallique laminée (1), l'appareil de détermination de forme de bande comprenant :

    une caméra (61, 62, 63, 64) qui est installée de façon à capturer une image incluant une zone où une lumière de réflexion en forme de bande qui traverse une surface de la bande métallique laminée (1) dans un sens de la largeur de bande est visible ; et
    une unité (80) de traitement d'image qui détermine une forme de bande de la bande métallique (1) sur une base de l'image capturée par la caméra (61, 62, 63, 64),
    l'unité (80) de traitement d'image divisant la zone à l'intérieur de l'image en une pluralité de segments dans le sens de la largeur de bande de la bande métallique (1), convertissant une position dans le sens de la largeur de bande à l'intérieur d'une plage de largeur de bande de la zone à l'intérieur de l'image en une plage de $-1 \leq x \leq 1$ en supposant qu'une valeur indiquant une position dans le sens de la largeur de bande de chacun des segments formés par la division est une variable (x), et obtenant des coefficients ($C_0'$, $C_1'$, $C_2'$, et $C_4'$) d'un polynôme de Chebyshev d'une Équation (1) suivante en appliquant une information d'indice indiquant une taille de la zone dans chaque segment formé par la division au polynôme de Chebyshev incluant uniquement un terme d'ordre zéro, un terme de premier ordre, un terme de deuxième ordre, et un terme de quatrième ordre de x, le polynôme de Chebyshev ayant l'information d'indice comme une distribution E(x) de chacun des segments, et transférant, comme un signal de résultat de détermination d'une distribution d'allongement de bande dans le sens de la largeur de bande, un ou plusieurs des coefficients incluant un coefficient d'ordre zéro ($C_0'$), un coefficient de premier ordre ($C_1'$), un coefficient de deuxième ordre ($C_2'$), et un coefficient de quatrième ordre ($C_4'$) comme des informations correspondant à la distribution dans le sens de la largeur de bande d'allongement de bande dans un sens de laminage.

$$E(x) = C_0' + C_1' \times x + C_2' \times (2x^2 - 1) + C_4' \times (8x^4 - 8x^2 + 1) \text{ où } -1 \leq x \leq 1 \qquad (1)$$

2. Appareil de détermination de forme de bande pour une bande métallique (1) selon la revendication 1, dans lequel l'information d'indice est une longueur moyenne dans le sens de laminage, une valeur médiane de longueurs dans le sens de laminage, ou un superficie dans chacun des segments, la longueur moyenne, la valeur médiane, ou la superficie étant calculée pour chaque unité de pixel dans le sens de la largeur de bande dans les segments.

3. Appareil de détermination de forme de bande pour une bande métallique (1) selon la revendication 2, dans lequel l'unité (80) de traitement d'image transfère un signal d'affichage à un dispositif (85) d'affichage pour afficher, parmi des chiffres de fonctions de termes d'une composante d'ordre zéro ($C_0'$), d'une composante de premier ordre ($C_1' \times x$), d'une composante de deuxième ordre ($C_2' \times (2x^2 - 1)$), et d'une composante de quatrième ordre ($C_4' \times (8x^4 - 8x^2 + 1)$) dans l'Équation (1), un (des) chiffre(s) de composantes d'un ou plusieurs ordres se rapportant au(x) coefficient(s) devant être transféré(s) comme le signal de résultat de détermination.

4. Appareil de détermination de forme de bande pour une bande métallique (1) selon l'une quelconque des revendications 1 à 3, dans lequel

    la caméra (61, 62, 63, 64) est disposée sur un extérieur dans le sens de la largeur de bande de la bande métallique (1) telle que vue du dessus, et
    l'unité (80) de traitement d'image exécute un traitement de correction de telle façon que plus une position supposée être une position réelle correspondant à une position visible à l'intérieur de l'image est distante de la caméra (61, 62, 63, 64), plus une distance entre des positions de deux points à l'intérieur de l'image est longue.

5. Appareil de détermination de forme de bande pour une bande métallique (1) selon la revendication 4, dans lequel l'unité (80) de traitement d'image diminue, comme le traitement de correction, des intervalles de graduation d'un axe bidimensionnel appliqués sur l'image alors que la position supposée être la position réelle correspondant à la position visible à l'intérieur de l'image devient plus distante de la caméra (61, 62, 63, 64).

6. Appareil de détermination de forme de bande pour une bande métallique (1) selon l'une quelconque des revendications 1 à 3, dans lequel

   la caméra (61, 62, 63, 64) est disposée sur un extérieur dans le sens de la largeur de bande de la bande métallique (1) telle que vue du dessus, et

   l'unité (80) de traitement d'image, lors du calcul d'une longueur moyenne dans le sens de laminage ou d'une valeur médiane de longueurs dans le sens de laminage dans l'information d'indice dans chacun des segments, traite les longueurs dans le sens de laminage de la zone de telle sorte que les longueurs sont augmentées en proportion de l'augmentation d'une distance d'une position supposée être une position réelle correspondant à une position visible à l'intérieur de l'image depuis la caméra (61, 62, 63, 64).

7. Appareil de détermination de forme de bande pour une bande métallique (1) selon l'une quelconque des revendications 4 à 6, dans lequel la caméra (61, 62, 63, 64) est disposée à une hauteur égale ou supérieure à 1 m et égale ou inférieure à 5 m de la bande métallique (1) et à une distance égale ou supérieure à 5 m et égale ou inférieure à 40 m d'un bord de bande de la bande métallique (1).

8. Laminoir comprenant :

   l'appareil de détermination de forme de bande pour une bande métallique (1) selon l'une quelconque des revendications 1 à 7 ; et

   un contrôleur (82),

   le contrôleur transférant un ou plusieurs signaux d'opération se rapportant à une quantité de planage, une force de flexion, ou un angle transversal de paire du laminoir sur une base du signal de résultat de détermination.

9. Procédé de détermination de forme de bande pour une bande métallique laminée (1), le procédé de détermination de forme de bande comprenant :

   une étape de capture pour capturer, par une caméra (61, 62, 63, 64), une image incluant une zone où une lumière de réflexion en forme de bande qui traverse la bande métallique laminée (1) dans un sens de la largeur de bande est visible ; et

   une étape de traitement d'image pour déterminer une forme de bande de la bande métallique (1) sur une base de l'image capturée à l'étape de capture,

   l'étape de traitement d'image divisant la zone à l'intérieur de l'image en une pluralité de segments dans le sens de la largeur de bande de la bande métallique (1), convertissant une position dans le sens de la largeur de bande de la zone à l'intérieur de l'image en une plage de $-1 \leq x \leq 1$ en supposant qu'une valeur indiquant une position centrale dans le sens de la largeur de bande de chacun des segments formés par la division est une variable (x), et obtenant un vecteur de coefficients de polynôme de Chebyshev ($C_0'$, $C_1'$, $C_2'$, et $C_4'$) en appliquant une information d'indice indiquant une taille de la zone dans chaque segment formé par la division à un polynôme de Chebyshev d'une Équation (1) suivante incluant uniquement un terme d'ordre zéro, un terme de premier ordre, un terme de deuxième ordre, et un terme de quatrième ordre, le polynôme de Chebyshev ayant l'information d'indice dans chacun des segments comme une distribution E(x) de chacun des segments, et transférant, comme un signal de résultat de détermination d'une distribution d'allongement de bande dans le sens de la largeur de bande, un ou plusieurs de coefficients incluant un coefficient d'ordre zéro ($C_0'$), un coefficient de premier ordre ($C_1'$), un coefficient de deuxième ordre ($C_2'$), et un coefficient de quatrième ordre ($C_4'$) comme des informations correspondant à la distribution dans le sens de la largeur de bande d'allongement de bande dans un sens de laminage.

$$E(x) = C_0' + C_1' \times x + C_2' \times (2x^2 - 1) + C_4' \times (8x^4 - 8x^2 + 1) \text{ où } -1 \leq x \leq 1 \qquad (1)$$

10. Procédé de détermination de forme de bande pour une bande métallique (1) selon la revendication 9, dans lequel, comme l'information d'indice, une longueur moyenne dans le sens de laminage, une valeur médiane de longueurs dans le sens de laminage, ou un superficie dans chacun des segments est calculée pour chaque unité de pixel dans le sens de la largeur de bande dans les segments.

**11.** Procédé de détermination de forme de bande pour une bande métallique (1) selon la revendication 9, dans lequel l'étape de traitement d'image transfère un signal d'affichage à un dispositif (85) d'affichage pour afficher, parmi des chiffres de fonctions de termes d'une composante d'ordre zéro ($C_0$'), d'une composante de premier ordre ($C_1$' $\times$ x), d'une composante de deuxième ordre ($C_2$' $\times$ ($2x^2$ - 1)), et d'une composante de quatrième ordre ($C_4$' $\times$ ($8x^4$ - $8x^2$ + 1)) dans l'Équation (1), un (des) chiffre(s) de composantes d'un ou plusieurs ordres se rapportant au(x) coefficient(s) devant être transféré(s) comme le signal de résultat de détermination.

**12.** Procédé de détermination de forme de bande pour une bande métallique (1) selon l'une quelconque des revendications 9 à 11, dans lequel

l'utilisation de la caméra (61, 62, 63, 64) disposée sur un extérieur dans le sens de la largeur de bande de la bande métallique (1) telle que vue du dessus, et
l'unité (80) de traitement d'image exécute un traitement de correction de telle façon que plus une position supposée être une position réelle correspondant à une position visible à l'intérieur de l'image est distante de la caméra (61, 62, 63, 64), plus une distance entre des positions de deux points à l'intérieur de l'image est longue.

**13.** Procédé de détermination de forme de bande pour une bande métallique (1) selon l'une quelconque des revendications 9 à 11, dans lequel

la caméra (61, 62, 63, 64) est disposée sur un extérieur dans le sens de la largeur de bande de la bande métallique (1) telle que vue du dessus, et
le procédé de traitement d'image, lors du calcul d'une longueur moyenne dans le sens de laminage ou d'une valeur médiane de longueurs dans le sens de laminage dans l'information d'indice, traite les longueurs dans le sens de laminage de la zone de telle sorte que les longueurs sont augmentées en proportion de l'augmentation d'une distance d'une position supposée être une position réelle correspondant à une position visible à l'intérieur de l'image depuis la caméra (61, 62, 63, 64).

Fig 1

EP 4 231 232 B1

Fig 2

1

1A

ROLLING
DIRECTION

71,72,73,74

# Fig 3

1B

1

ROLLING
DIRECTION

71,72,73,74

## Fig 4

**AVERAGE LENGTH Laj WITHIN REFLECTING LIGHT AREA DIVIDED SEGMENT (DIVISION j = 1 TO 5)**

AVERAGE LENGTH Laj WITHIN DIVIDED SEGMENT

STRIP WIDTH DIRECTION

DIVISIONS IN STRIP WIDTH DIRECTION

STRIP WIDTH DIRECTION x

UPSTREAM SIDE BOUNDARY LINE

DOWNSTREAM SIDE BOUNDARY LINE

DIVISION 1
DIVISION 2
DIVISION 3
DIVISION 4
DIVISION 5

ROLLING DIRECTION

CHEBYSHEV POLYNOMIAL FIRST ORDER COMPONENT OF Laj

CHEBYSHEV POLYNOMIAL (FIRST ORDER COMPONENT FIGURE)

CHEBYSHEV POLYNOMIALSECOND ORDER COMPONENT OF Laj

CHEBYSHEV POLYNOMIAL (SECOND ORDER COMPONENT FIGURE)

CHEBYSHEV POLYNOMIALFOURTH ORDER COMPONENT OF Laj

CHEBYSHEV POLYNOMIAL (FOURTH ORDER COMPONENT FIGURE)

# Fig 5

AREA Sj WITHIN REFLECTING LIGHT AREA
DIVIDED SEGMENT (DIVISION j = 1 TO 5)

AREA Sj WITHIN
DIVIDED SEGMENT

## Fig 6

MEDIAN VALUE Mj WITHIN REFLECTING LIGHT AREA
DIVIDED SEGMENT (DIVISION j = 1 TO 5)

MEDIAN VALUE Mj
WITHIN DIVIDED SEGMENT

CHEBYSHEV POLYNOMIAL
(FIRST ORDER COMPONENT FIGURE)

CHEBYSHEV POLYNOMIAL
(SECOND ORDER COMPONENT FIGURE)

CHEBYSHEV POLYNOMIAL
(FOURTH ORDER COMPONENT FIGURE)

Fig 7

REFLECTING LIGHT AREA
DIVIDED SEGMENT

DRIVE SIDE (DS)

X=-1

x1 — E1
x2 — E2
x3 — E3
x4 — E4

STRIP WIDTH W

INDEX INFORMATION

x5 — E5
x6 — E6
x7 — E7

WORK SIDE (WS)

X=1

X

EP 4 231 232 B1

# Fig 8

85

## ZEROTH ORDER COMPONENT

## FIRST ORDER COMPONENT

## SECOND ORDER COMPONENT

## FOURTH ORDER COMPONENT

# Fig 9

ROLLING DIRECTION

41

51

64

82

CONTR
OLLER

LEVELING

TARGET VALUE
FIRST ORDER
COMPONENT + -

IMAGE PROCESS
ING COMPUTER

FIRST ORDER
COMPONENT

80

Fig 10

ROLLING DIRECTION

40

WR BENDING FORCE ETC.

WR BENDING FORCE
ETC.

64

50

CONTRO
LLER

82

TARGET VALUE
SECOND ORDER
COMPONENT

+ -

IMAGE
PROCESSING
COMPUTER

SECOND ORDER
COMPONENT

80

Fig 11

ROLLING DIRECTION

WR BENDING FORCE, PAIR CROSS ANGLE, ETC.

40

64

50

WR BENDING FORCE, PAIR CROSS ANGLE, ETC.

CONTRO
LLER

82

TARGET VALUE
FOURTH ORDER
COMPONENT

+

-

IMAGE PROCESS
ING COMPUTER

FOURTH ORDER
COMPONENT

80

# Fig 12

ROLLING DIRECTION

61,62,63,64

1

d'

d

h

W

D

Z

Y

X

EP 4 231 232 B1

EP 4 231 232 B1

## Fig 13

ROLLING
DIRECTION

1

61,62,63,64

d'

d

W

D

Y

X

# Fig 14

ROLLING DIRECTION

61,62,63,64

EP 4 231 232 B1

EP 4 231 232 B1

## Fig 15

Fig 16

# Fig 17

# Fig 18

```
                    START

                                              S101
        CAPTURE CAMERA IMAGES BETWEEN STANDS

                                              S102
            CALCULATE BOUNDARY LINES
        (UPSTREAM SIDE AND DOWNSTREAM SIDE)
            OF REFLECTING LIGHT AREA
                                              S103
        CORRECTION PROCESSING ON BOUNDARY LINE
        COORDINATES OF REFLECTING LIGHT AREA
                                              S104
        SET NUMBER OF DIVISIONS IN STRIP
        WIDTH DIRECTION OF REFLECTING LIGHT AREA
                                              S105
        CALCULATE INDEX INFORMATION FOR
        EACH DIVIDED SEGMENT OF REFLECTING LIGHT AREA
                                              S106
        CALCULATE STRIP WIDTH DIRECTION DISTRIBUTION
                CHEBYSHEV POLYNOMIAL
        (ZEROTH, FIRST, SECOND, FOURTH ORDER COMPONENT)
                                              S107
        CALCULATE DIFFERENCE BETWEEN TARGET VALUE
            AND SENSED VALUE OF EACH COMPONENT
        (ZEROTH, FIRST, SECOND, FOURTH ORDER COMPONENT)
```

IS EACH OF ALL
COMPONENTS WITHIN CONTROL TARGET VALUE
ALLOWABLE VALUE?

No

S108

Yes

S109

UPSTREAM SIDE AND
DOWNSTREAM SIDE
ROLLING MILL OPERATION
AMOUNT CONTROL COMMAND
(FIRST ORDER COMPONENT)

S110

UPSTREAM SIDE AND
DOWNSTREAM SIDE
ROLLING MILL OPERATION
AMOUNT CONTROL COMMAND
(SECOND ORDER COMPONENT)

S111

UPSTREAM SIDE AND
DOWNSTREAM SIDE
ROLLING MILL OPERATION
AMOUNT CONTROL COMMAND
(FOURTH ORDER COMPONENT)

S112

AUTOMATIC INTERVENTION
CONTROL/ OPERATOR
MANUAL INTERVENTION

END ( RETURN TO START )

**REFERENCES CITED IN THE DESCRIPTION**

**Patent documents cited in the description**

- JP 6808888 B

- JP 2008307586 B